# EUROPEAN PATENT SPECIFICATION

(11) **EP 4 569 802 B1**
(45) Date of publication and mention of the grant of the patent: **25.03.2026**
(21) Application number: 23754316.0
(22) Date of filing: 10.08.2023
(51) Int. Cl.: H04L 67/51, H04L 65/80

(54) **APPLICATION SESSION MANAGEMENT**
ANWENDUNGSSITZUNGSVERWALTUNG
GESTION DE SESSION D´APPLICATION

(30) Priority: 10.08.2022 EP 22382777
(43) Date of publication of application: 18.06.2025
(73) Proprietor: Telefonaktiebolaget LM Ericsson (publ), 164 83 Stockholm (SE)
(72) Inventor: RIVAS MOLINA, Ignacio, 28045 Madrid (ES); AZORERO, Fuencisla Garcia, 28014 Madrid (ES); SCHLIWA-BERTLING, Paul, 585 71 LJUNGSBRO (SE); INIESTA GONZALEZ, Antonio, 28046 Madrid (ES)
(74) Representative: Ericsson
(86) International application number: PCT/EP2023/072175
(87) International publication number: WO 2024/033475

(56) References cited:
- "3rd Generation Partnership Project; Technical Specification Group Services and System Aspects; Study on XR (Extended Reality) and media services (Release 18)", no. V0.3.0, 31 May 2022 (2022-05-31), pages 1 - 218, XP052182634, Retrieved from the Internet <URL:https://ftp.3gpp.org/Specs/archive/23_series/23.700-60/23700-60-030.zip 23700-60-030_MCCclean.docx> [retrieved on 20220531]

## Description

### Technical Field

The disclosure relates to methods for managing an application session and functions configured to operate in accordance with those methods.

### Background

The Third Generation Partnership Project (3GPP) is currently standardising the fifth generation (5G) Core (5GC) network as part of the overall 5G System (5GS) architecture. Prior to 3GPP Release 15 (Rel-15), the functional distribution within the Core Network (CN) was based on network elements exchanging messages over point-to-point interfaces. With 3GPP Rel-15, to facilitate cloud native implementations and deployments, a Service-Based Architecture (SBA) has been introduced, based on the concept of Network Functions (NFs). The NFs offer and consume NF Services over Service Based Interfaces (SBIs).

A service-based NF interaction with other NFs can be characterised as follows. The NF registers in a Network Repository Function (NRF) the list of supported NF services. Other NFs can discover the NF services using the NRF and select a specific instance of the NF. The NFs can consume NF services of the selected NF instance.

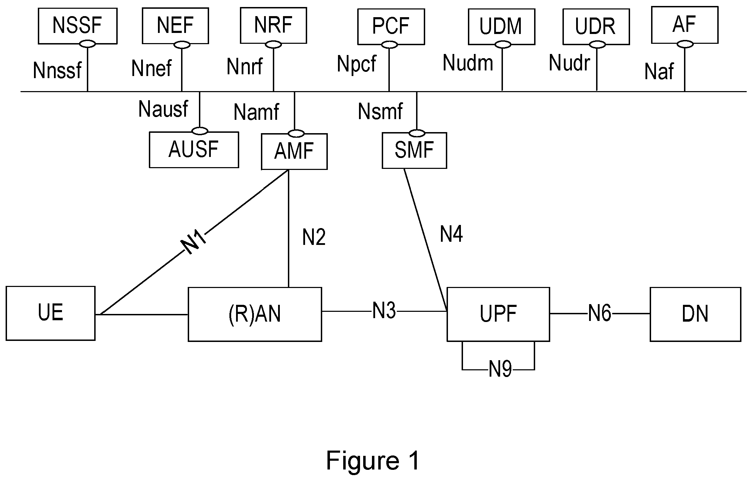

Figure 1 illustrates a 5G network architecture as defined by 3GPP. The 5G network architecture of Figure 1 shows service-based interfaces used within a Control Plane (CP). It will be appreciated that not all NFs are depicted.

The 5G network architecture of Figure 1 comprises a Network Slice Selection Function (NSSF) that has an Nnssf interface, a Network Exposure Function (NEF) that has an Nnef interface, an NRF that has an Nnrf interface, a Policy Control Function (PCF) that has an Npcf interface, a Unified Data Management (UDM) that has an Nudm interface, a Unified Data Repository (UDR) that has an Nudr interface, and an Application Function (AF) that has an Naf interface. The 5G network architecture of Figure 1 also comprises an Authentication Server Function (AUSF) that has an Nausf interface, an Access and Mobility Management Function (AMF) that has an Namf interface, and a Session Management Function (SMF) that has an Nsmf interface. The Nnssf, Nnef, Nnrf, Npcf, Nudm, Nudr, and Naf interfaces are service-based interfaces.

The NRF provides registration and discovery capabilities among the different NFs within the 5GC. In short, when a given NF (e.g. UDM type) registers an NF profile in the NRF, other NFs may discover it automatically by simply querying the NRF to find NFs of a given type (e.g. UDM type). The AMF has an N1 interface to a User Equipment (UE) and an N2 interface to an Access Network (AN). The AN can be a radio AN (RAN). The SMF has an N4 interface to a User Plane Function (UPF). The interface between the R(AN) and the UPF is the N3 interface, the interface between the UPF and a Data Network is the N6 interface, and the interface between two UPFs is the N9 interface. The N1, N2, N4, N3, N6 and N9 interfaces are point to point interfaces.

3GPP Technical Report (TR) 23.700-60 studies key issues, solutions and conclusions on the support of advanced media services, e.g. High Data Rate Low Latency (HDRLL) services, Augmented Reality (AR) services, Virtual Reality (VR) services, Extended Reality (XR) services, and tactile/multi-modality communication services, in 3GPP Release 18 (Rel-18).

### Summary

As mentioned earlier, 3GPP Technical Report (TR) 23.700-60 studies key issues, solutions and conclusions on the support of advanced media services in 3GPP Release 18 (Rel-18). The objectives include the following:
Enhancements for supporting multi-modality service:
   - Study whether and how to enable delivery of related tactile and multi-modal data (e.g. two or more of audio, video and haptic data related to a specific time) with an application to the user at a similar time, focusing on the need for policy control enhancements (e.g. Quality of Service (QoS) policy coordination).
Enhancements of network exposure to support interaction between 5GS and application:
   - Study whether and how interaction between AF and 5GS is needed for application synchronization and QoS policy coordination among multiple UEs or between multiple QoS flows per UE.
   - Study exposure of 5GS QoS information (e.g. QoS capabilities) and network conditions to the Application to enable quick codec/rate adaptation help to provide desired Quality of Experience (QoE) (e.g. such as assist in alleviating 5GS congestion).
3GPP Technical Report (TR) 23.700-60 identifies a number of key issues. In particular:
   - Key Issue #1: Policy control enhancements to support multi-modality flows coordinated transmission for single UE. This key issue studies how to support coordinated transmission for multi-modality flows with a single UE. The objective of this key issue is to study how to enhance 5GS to better support the coordinated delivery of application traffic streams that are related to each other and belong to a single UE. In particular, this key issue will study:
      ∘ Whether and how to enable, for a single UE, policy enhancements for delivering related tactile and multi-modal data (e.g. two or more of audio, video and haptic data related to a specific time) for an application to the user at a similar time (e.g. QoS policy coordination).
      ∘ Whether and how interaction between AF and 5GS is performed for application synchronization and QoS policy coordination between multiple QoS flows of a single UE.
   - Key Issue #2: Support the Application Synchronization and QoS Policy Coordination for Multi-modal Traffic among Multiple UEs. This key issue studies how to enable application synchronization and QoS policy coordination for Multimodal Data flows among multiple UEs. In particular:
      ∘ Whether and how to enable, for multiple UEs, the delivery of related tactile and multi-modal data (e.g. two or more of audio, video and haptic data related to a specific time) with an application to the user at a similar time, focusing on the need for policy control enhancements (e.g. QoS policy coordination).
      ∘ Whether and how interaction between an AF and the 5GS is needed for QoS policy coordination among multiple UEs.

3GPP Technical Specification (TS) 22.261, clause 6.43, specifies service requirements for the 5G system in relation to tactile and multi-modal communication services. 3GPP TR 22.847 provides more details on stage 1 specifications for multi-modal services, as well as example use cases. 3GPP TR 23.700-60 is a working document that contains solutions proposed so far to resolve the key issues identified. 3GPP TS 23.502 clause 4.15.6.6 describes the existing signalling procedure for setting up an AF session with required QoS within the supported procedures for network capability exposure. 3GPP TS 23.503 clause 6.1.3.22 specifies the policy control requirements related to AF session with required QoS functionality.

None of the solutions proposed so far in 3GPP TS 23.700-60 for Key Issues #1 & #2 resolve the problem in an efficient manner whilst meeting the service requirements. In order to illustrate this, an analysis of each existing solution and the reason why they do not resolve the problem will now be described.

Solution #1 (for Key Issue #1) introduces a new QoS parameter for a delay difference between a couple of flows. However, it does not specify to what extent a QoS parameter can be enforced, used by the (R)AN, or monitored. In addition, application synchronisation may not be limited to two flows, but it may be required between multiple (more than two) flows. Finally, the solution does not work when the synchronisation threshold between two or more modalities is less than the latency Key Performance Indicator (KPI) for the application.

Solution #36 (for Key Issue #1) proposes to perform policy control for multiple flows all together, as an atomic operation that may only be fully successful or fail. However, such an approach is incorrect. It is up to the application layer to decide what to do in case one of the data stream fails. For example, a video conference call requires both audio and video data streams to be successfully delivered. If the video stream fails, the conference call can continue only with audio (impacting the user experience, but still allowing communication). However, if the audio stream fails, the conference call is typically terminated.

A better approach is that 5GC notifies the AF when one of the data streams fails to be established or can no longer be maintained (by following an existing procedure in Npcf_PolicyAuthorization service), so that the application layer can take the necessary actions.

Solution #39 does not resolve the challenges identified by Key Issue #1, but reuses existing PCF UE Route Selection Policy (URSP) functionality to ensure all data flows that belong to the same multimodal (XRM) service application are transferred on the same Protocol Data Unit (PDU) session. This may be used as a complement to other solutions, but it does not address the key issue.

Solution #40 resolves the synchronisation of media flows associated with multi-modality traffic by reusing application layer-based solutions, such us the solution based on Session Initiation Protocol (SIP) / Session Description Protocol (SDP) / Real-time Transport Protocol (RTP) + Real Time Control Protocol (RTCP) for Internet Protocol Multimedia Subsystem (IMS) traffic. However, the solution does not mention the need to have a common wall-clock time for all data flows that need to be in sync, from different UEs. The solution also resolves the issue of QoS policy coordination between multiple QoS flows of a single UE, in the scenario of a trusted AF, but fails to identify impacts on the NEF northbound Application Programming Interfaces (APIs) for the scenario of untrusted AFs. Also, it is not clear how the solution provides QoS policy coordination between multiple QoS flows from multiple UEs.

Solution #37 (for Key Issue #2) contains two aspects: (i) provisioning of group policy information to the UDR via the NEF, and (ii) interactions to update individual UE policy with PCF coordination. However, provisioning of group policy information is not useful as each of the data streams that comprise a multi-modal application, in general, requires a different set of QoS parameters (see, for example, requirements for audio, video, sensor and haptic feedback provided in 3GPP TS 22.847). The solution also does not specify how a latency threshold parameter can be enforced or used by the (R)AN or 5GC. Moreover, providing policy information before PDU session establishment is a waste of resources. It is more efficient to provide those parameters on demand, when the XRM session is initiated. In addition, it may not be possible for the application to provide Flow Description(s) before the PDU session is established, if server Internet Protocol (IP) address/port is allocated on demand. When the AF modifies the policy for a specific traffic flow of one UE, it is not necessary to update other traffic flows. The examples provided in this solution are not correct, as a multi-modal application may comprise some data streams that require higher priority level (e.g. audio) or Packet Delay Budget, PDB (e.g. haptic feedback) than others. Applications need to be able to control each data stream independently. Finally, allowing both the NEF and the PCF to update application data in the UDR is not a good design pattern as this may create inconsistencies and race conditions.

Solution #38 proposes that the UDM allocates a coordination identifier for the tactile and multi-modal communication service, which is out of the scope of current UDM responsibilities. Such coordination identifier, if needed, may be best allocated by the application layer. In addition, it may not be possible for the application to provide service parameters (e.g. Flow Descriptions) before the PDU session is established as application server IP address/port are typically allocated on demand. It is more efficient that the AF provides the service parameters at the time the XRM session is initiated. Finally, the solution is complex and significantly impacts on the 5GC (e.g. AMF, SMF, PCF, NEF, UDM, UDR) and also impacts on the UE.

Solution #2 assumes that a modification of the policy requirements (via the Nnef_AFsessionWithQos_Update operation), for one of the data streams that comprises a multi-modal application, has a necessary effect on other data streams that belong to the same multi-modal application. However, this is not really the case as the application may want to modify one data stream only. Hence, the procedure proposed is inefficient and over-complicated. Moreover, the PCF cannot know how the modification of one data stream may impact other ongoing data streams. It is up to the application layer to control impacts on each data stream. Extensive configuration is required in the PCF (that contains no application business logic) to take those decisions, which makes the solution impractical. In addition, the procedure proposed is incomplete.

Solution #3 complements Solution #2 with a proposal to ensure that the same PCF is selected for multiple UE's PDU sessions that comprise a multi-modal application. However, this is only possible in some scenarios. If data streams use different Data Network Names (DNNs) or network slices, and there is a specific PCF instance to handle such DNN or network slice, then it is not possible to select the same PCF. Moreover, the reason stated to select the same PCF is that the policy authorised to the AF session of each UE in the group may be adjusted due to the policy change of another UE in the same group. However, such logic cannot be held in the PCF. The way in which the modification of AF session in one UE may impact another UE session needs to be under the control of the application layer (see also the analysis provided for solution #2).

Finally, Internal Group Identifier (ID) information is already provided by the SMF to the PCF during PDU session establishment, so there is no need to store such information in the UDR.

Solution #4 proposes a complex procedure for QoS policy coordination for multiple UEs, which builds on the existing procedures for an AF session with QoS ("AFsessionWithQoS"). The following aspects of the solution are considered inefficient.

Firstly, having a single procedure for AFsessionWithQoS for multiple UEs increases the complexity of the NEF logic and northbound APIs without delivering more flexibility to the AF or being more efficient. This is because not all UEs that are part of a multi-modal application initiate communication at the same time. An example scenario is described in 3GPP TS 22.847, which states that "In another scenario, the devices associated to the same tactile and multi-modal communication service may be triggered to wake up by the discovery of a tactile and multi-modality capable user/UE in proximity". Hence, using a single AF-NEF interaction to handle multiple UE sessions is more troublesome than letting the AF handle each UE session independently.

Secondly, the procedure proposed is subject to inconsistencies and race conditions as a first PCF (PCF1) needs to update multi-modal information in a Binding Support Function (BSF), before a second (PCF2) can discover the relationship with PCF1. Thirdly, subscription from PCF1 to notification of events from PCF2 is not useful, as PCF1 does not have the necessary application layer logic to act upon events from another UE PDU session. It is up to the application function to trigger actions on a UE PDU session (if required) upon events occurring in another UE PDU session, according to the nature of the event, the data stream affected, the characteristics of the multi-modal application, etc. Moreover, impacts on the Npcf_PolicyAuthorization_Subscribe operation are not clearly described. Finally, inconsistencies and race conditions may arise if both the PCF and the AF subscribe to the notification of events for an application session context and take different actions.

It is thus an object of the disclosure to obviate or eliminate at least some of the above-described disadvantages.

Therefore, according to an aspect of the disclosure, there is provided a first method for managing an application session. The first method is performed by an application function. The first method comprises transmitting a first message towards a network exposure function. The first message comprises a first request to reserve resources for an application session for an application that involves multiple media types. The first message comprises one or more requirements for the transmission of the multiple media types for the application session and information indicative that the resources are for an application that involves multiple media types. Therein, the one or more requirements comprise any one or more of
- one or more required quality of service, QoS, parameters for the transmission of the multiple media types;
- a requirement that media types having a dependency on one another are transmitted together;
- a requirement that media types having a dependency on one another are transmitted by a single wireless device or via a single wireless device;
- a requirement that media types defined as essential for the functioning of the application are transmitted together; and
- a requirement that media types defined as essential for the functioning of the application are transmitted by a single wireless device or via a single wireless device.

According to another aspect of the disclosure, there is provided an application function configured to operate in accordance with the first method described earlier. In some embodiments, the application function may comprise processing circuitry configured to operate in accordance with the first method described earlier. In some embodiments, the application function may comprise at least one memory for storing instructions which, when executed by the processing circuitry, cause the application function to operate in accordance with the first method described earlier.

According to another aspect of the disclosure, there is provided a second method for managing an application session. The second method is performed by a network exposure function. The second method comprises receiving a first message from an application function. The first message comprises a first request to reserve resources for an application session for an application that involves multiple media types. The first message comprises one or more requirements for the transmission of the multiple media types for the application session and information indicative that the resources are for an application that involves multiple media types. Therein, the one or more requirements comprise any one or more of
- one or more required quality of service, QoS, parameters for the transmission of the multiple media types;
- a requirement that media types having a dependency on one another are transmitted together;
- a requirement that media types having a dependency on one another are transmitted by a single wireless device or via a single wireless device;
- a requirement that media types defined as essential for the functioning of the application are transmitted together; and
- a requirement that media types defined as essential for the functioning of the application are transmitted by a single wireless device or via a single wireless device.

In one embodiment, the network exposure function may transmit a second message towards a policy control function. The second message comprises a second request for authorisation of a first request. The first request is a request to reserve resources for an application session for an application that involves multiple media types. The second message comprises information indicative that the resources are for an application that involves multiple media types.

According to another aspect of the disclosure, there is provided a network exposure function configured to operate in accordance with the second method described earlier. In some embodiments, the network exposure function may comprise processing circuitry configured to operate in accordance with the second method described earlier and/or the third method described earlier. In some embodiments, the network exposure function may comprise at least one memory for storing instructions which, when executed by the processing circuitry, cause the network exposure function to operate in accordance with the second method described earlier and/or the third method described earlier.

According to another aspect of the disclosure, there is provided a third method for managing an application session. In the third method, an application function transmits a first message towards a network exposure function, wherein the first message comprises a first request to reserve resources for an application session for an application that involves multiple media types. The first message further comprises one or more requirements for the transmission of the multiple media types for the application session and information indicative that the resources are for an application that involves multiple media types. Therein, the one or more requirements comprise any one or more of:
- one or more required quality of service, QoS, parameters for the transmission of the multiple media types;
- a requirement that media types having a dependency on one another are transmitted together;
- a requirement that media types having a dependency on one another are transmitted by a single wireless device or via a single wireless device;
- a requirement that media types defined as essential for the functioning of the application are transmitted together; and
- a requirement that media types defined as essential for the functioning of the application are transmitted by a single wireless device or via a single wireless device. The method further comprises transmitting, by the network exposure function, a second message towards a policy control function, wherein the second message comprises a second request for authorisation of the first request and comprises information indicative that the resources are for an application that involves multiple media types. In response to receiving the second message, the policy control function derives one or more quality of service parameters for the application session based on the information indicative that the resources are for an application that involves multiple media types.

According to another aspect of the disclosure, there is provided a system comprising the application function described earlier, the network exposure function described earlier, and a policy control function being configured to derive, in response to receiving the second message, one or more quality of service parameters for the application session based on the information indicative that the resources are for an application that involves multiple media types.

According to another aspect of the disclosure, there is provided a computer program comprising instructions which, when executed by processing circuitry, cause the processing circuitry to perform the first method described earlier, the second method described earlier, and/or the third method described earlier.

Thus, there are provided advantageous techniques for managing application sessions.

### Brief description of the drawings

For a better understanding of the techniques, and to show how they may be put into effect, reference will now be made, by way of example, to the accompanying drawings, in which:
Figure 1 is a block diagram illustrating an existing network architecture;
Figure 2 is a block diagram illustrating an application function according to an embodiment;
Figure 3 is a block diagram illustrating a method performed by the application function according to an embodiment;
Figure 4 is a block diagram illustrating a network exposure function according to an embodiment;
Figure 5 is a block diagram illustrating a method performed by the network exposure function according to an embodiment;
Figure 6 is a block diagram illustrating a method performed by the network exposure function according to an embodiment;
Figure 7 is a block diagram illustrating a policy control function according to an embodiment;
Figure 8 is a block diagram illustrating a method performed by the policy control function according to an embodiment;
Figure 9 is a schematic illustration of an example use case; and
Figure 10 is a signalling diagram illustrating an exchange of signals in a system according to an embodiment.

### Detailed Description

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

In some instances, detailed descriptions of well-known methods, nodes, interfaces, circuits, and devices are omitted so as not to obscure the description with unnecessary detail. Those skilled in the art will appreciate that the functions described may be implemented in one or more nodes using hardware circuitry (e.g., analog and/or discrete logic gates interconnected to perform a specialized function, application specific integrated circuits (ASIC)s, programmable logic arrays (PLAs), etc.) and/or using software programs and data in conjunction with one or more digital microprocessors or general purpose computers. Nodes that communicate using an air interface also have suitable radio communications circuitry. Moreover, where appropriate the technology can additionally be considered to be embodied entirely within any form of computer-readable memory, such as solid-state memory, magnetic disk, or optical disk containing an appropriate set of computer instructions that would cause a processor to carry out the techniques described herein.

Hardware implementation may include or encompass, without limitation, digital signal processor (DSP) hardware, a reduced instruction set processor, hardware (e.g., digital or analogue) circuitry including but not limited to application specific integrated circuit(s) (ASIC) and/or field programmable gate array(s) (FPGA(s)), and (where appropriate) state machines capable of performing such functions.

As mentioned earlier, there is described herein advantageous techniques for managing an application session. The application session referred to herein can be established for a wireless device according to some embodiments. For example, the application session can be for providing a service to a wireless device.

Examples of a wireless device as referred to herein include, but are not limited to, a smart phone, a mobile phone, a cell phone, a voice over IP (VoIP) phone, a wireless local loop phone, a desktop computer, a personal digital assistant (PDA), a wireless camera, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE), a vehicle-mounted wireless terminal device, virtual reality (VR) glasses, VR gloves, etc. The wireless device as referred to herein may support device-to-device (D2D) communication, for example, by implementing a third generation partnership project (3GPP) standard for sidelink communication, vehicle-to-vehicle (V2V), vehicle-to-infrastructure (V2I), vehicle-to-everything (V2X) and may in this case be referred to as a D2D communication device.

As yet another specific example, in an Internet of Things (IoT) scenario, the wireless device as referred to herein may represent a machine or other device that performs monitoring and/or measurements, and transmits the results of such monitoring and/or measurements to another wireless device and/or a network node. The wireless device as referred to herein may in this case be a machine-to-machine (M2M) device, which may in a 3GPP context be referred to as a machine type communication (MTC) device. As one particular example, the wireless device as referred to herein may be a user equipment (UE), e.g. implementing the 3GPP narrow band internet of things (NB-IoT) standard. Particular examples of such machines or devices are sensors, metering devices such as power meters, industrial machinery, home or personal appliances (e.g. refrigerators, televisions, etc), or personal wearables (e.g. watches, fitness trackers, etc). In other scenarios, the wireless device as referred to herein may represent a vehicle or other equipment that is capable of monitoring and/or reporting on its operational status or other functions associated with its operation. The wireless device as referred to herein may represent the endpoint of a wireless connection, in which case the wireless device as referred to herein may be referred to as a wireless terminal. Furthermore, the wireless device as referred to herein may be mobile, in which case it may also be referred to as a mobile device or a mobile terminal.

The advantageous techniques described herein can be implemented by an application function (AF), a network exposure function (NEF), and/or a policy control function (PCF).

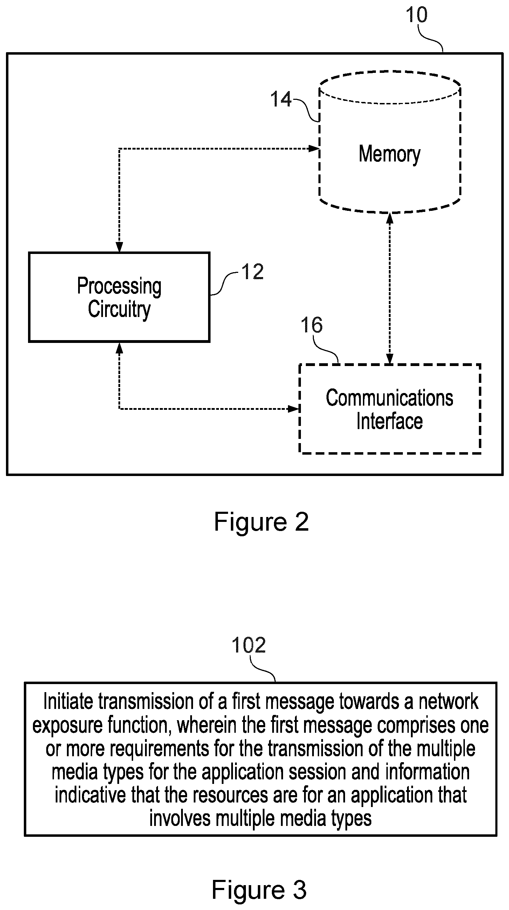

**Figure** 2 illustrates an application function (AF) 10 in accordance with an embodiment. The application function 10 is for managing an application session. In some embodiments, the application function 10 referred to herein can refer to equipment capable, configured, arranged and/or operable to communicate directly or indirectly with the network exposure function referred to herein, and/or with other nodes or equipment to enable and/or to perform the functionality described herein. The application function 10 referred to herein may be a node. For example, in some embodiments, the application function 10 may be a physical node (e.g. a physical machine or server) or a virtual node (e.g. a virtual machine (VM)). Thus, the application function 10 referred to herein may also be referred to as an application function node. In some embodiments, the application function 10 referred to herein can be an application server (AS).

As illustrated in Figure 2, the application function 10 comprises processing circuitry (or logic) 12. The processing circuitry 12 controls the operation of the application function 10 and can implement the method described herein in respect of the application function 10. The processing circuitry 12 can be configured or programmed to control the application function 10 in the manner described herein. The processing circuitry 12 can comprise one or more hardware components, such as one or more processors, one or more processing units, one or more multi-core processors and/or one or more modules. In particular implementations, each of the one or more hardware components can be configured to perform, or is for performing, individual or multiple steps of the method described herein in respect of the application function 10. In some embodiments, the processing circuitry 12 can be configured to run software to perform the method described herein in respect of the application function 10. The software may be containerised according to some embodiments. Thus, in some embodiments, the processing circuitry 12 may be configured to run a container to perform the method described herein in respect of the application function 10.

Briefly, the processing circuitry 12 of the application function 10 is configured to initiate transmission of a first message towards a network exposure function. The first message comprises a first request to reserve resources for an application session for an application that involves multiple media types. The first message comprises one or more requirements for the transmission of the multiple media types for the application session and information indicative that the resources are for an application that involves multiple media types.

As illustrated in Figure 2, in some embodiments, the application function 10 may optionally comprise a memory 14. The memory 14 of the application function 10 can comprise a volatile memory or a non-volatile memory. In some embodiments, the memory 14 of the application function 10 may comprise a non-transitory media. Examples of the memory 14 of the application function 10 include, but are not limited to, a random access memory (RAM), a read only memory (ROM), a mass storage media such as a hard disk, a removable storage media such as a compact disk (CD) or a digital versatile disk (DVD), and/or any other memory.

The processing circuitry 12 of the application function 10 can be communicatively coupled (e.g. connected) to the memory 14 of the application function 10. In some embodiments, the memory 14 of the application function 10 may be for storing program code or instructions which, when executed by the processing circuitry 12 of the application function 10, cause the application function 10 to operate in the manner described herein in respect of the application function 10. For example, in some embodiments, the memory 14 of the application function 10 may be configured to store program code or instructions that can be executed by the processing circuitry 12 of the application function 10 to cause the application function 10 to operate in accordance with the method described herein in respect of the application function 10. Alternatively or in addition, the memory 14 of the application function 10 can be configured to store any information, data, messages, requests, responses, indications, notifications, signals, or similar, that are described herein. The processing circuitry 12 of the application function 10 may be configured to control the memory 14 of the application function 10 to store information, data, messages, requests, responses, indications, notifications, signals, or similar, that are described herein.

In some embodiments, as illustrated in Figure 2, the application function 10 may optionally comprise a communications interface 16. The communications interface 16 of the application function 10 can be communicatively coupled (e.g. connected) to the processing circuitry 12 of the application function 10 and/or the memory 14 of the application function 10. The communications interface 16 of the application function 10 may be operable to allow the processing circuitry 12 of the application function 10 to communicate with the memory 14 of the application function 10 and/or vice versa. Similarly, the communications interface 16 of the application function 10 may be operable to allow the processing circuitry 12 of the application function 10 to communicate with any one or more nodes (e.g. any one or more of the wireless device and/or the network exposure function) referred to herein. The communications interface 16 of the application function 10 can be configured to transmit and/or receive information, data, messages, requests, responses, indications, notifications, signals, or similar, that are described herein. In some embodiments, the processing circuitry 12 of the application function 10 may be configured to control the communications interface 16 of the application function 10 to transmit and/or receive information, data, messages, requests, responses, indications, notifications, signals, or similar, that are described herein.

Although the application function 10 is illustrated in Figure 2 as comprising a single memory 14, it will be appreciated that the application function 10 may comprise at least one memory (i.e. a single memory or a plurality of memories) 14 that operates in the manner described herein. Similarly, although the application function 10 is illustrated in Figure 2 as comprising a single communications interface 16, it will be appreciated that the application function 10 may comprise at least one communications interface (i.e. a single communications interface or a plurality of communications interfaces) 16 that operates in the manner described herein. It will also be appreciated that Figure 2 only shows the components required to illustrate an embodiment of the application function 10 and, in practical implementations, the application function 10 may comprise additional or alternative components to those shown.

**Figure 3** illustrates a method performed by an application function 10 in accordance with an embodiment. The method is for managing an application session. In some embodiments, the application function 10 described earlier with reference to Figure 2 can be configured to operate in accordance with the method of Figure 3. For example, the method can be performed by or under the control of the processing circuitry 12 of the application function 10.

With reference to Figure 3, at block 102, transmission of a first message is initiated towards a network exposure function. More specifically, the application function 10 (e.g. the processing circuitry 12 of the application function 10) initiates transmission of the first message towards the network exposure function (e.g. via the communications interface 16 of the application function 10). Herein, the term "initiate" can mean, for example, cause or establish. Thus, the application function 10 (e.g. the processing circuitry 12 of the application function 10) can be configured to itself transmit the first message (e.g. via the communications interface 16 of the application function 10) or can be configured to cause another node to transmit the first message. The first message comprises a first request to reserve resources for an application session for an application that involves multiple media types. The first message comprises one or more requirements for the transmission of the multiple media types for the application session and information indicative that the resources are for an application that involves multiple media types.

The application session referred to herein may be, for example, an AF session and can thus also be referred to as an AF session. Herein, an application that involves multiple media types can also be referred to as a "multi-modal service" or "multi-modal communication service". The application that involves multiple media types can, for example, be an application service that comprises multiple modalities. Each data flow of a multi-modal service or multi-modal communication service can be referred to as a single-modal data flow. A multi-modal service or multi-modal communication service can be comprised of multiple (or a plurality of) single-modal data flows. A single-modal data flow can comprise one media type. Thus, multiple single-modal data flows can comprise multiple media types. Multiple single-modal data flows can be referred to herein as the transmission of multiple media types.

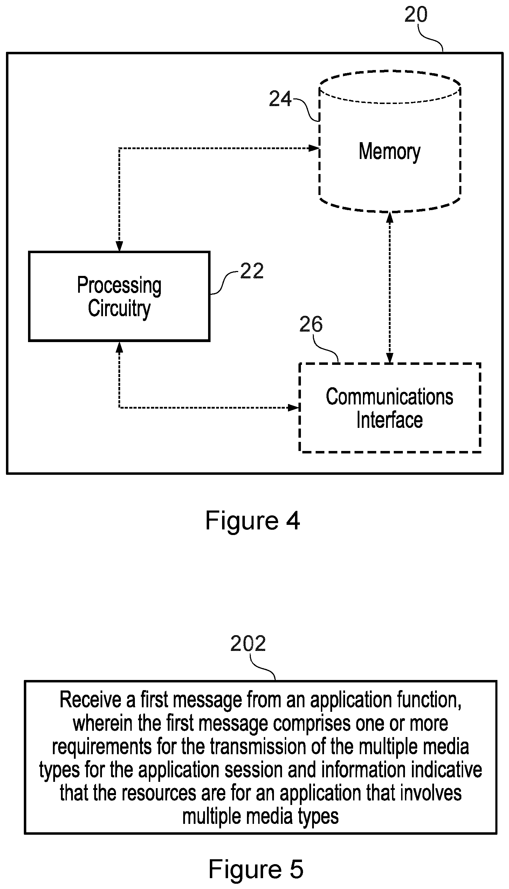

**Figure 4** illustrates a network exposure function (NEF) 20 in accordance with an embodiment. The network exposure function 20 is for managing an application session. In some embodiments, the network exposure function 20 referred to herein can refer to equipment capable, configured, arranged and/or operable to communicate directly or indirectly with the application function 10 referred to herein, with the policy control function referred to herein, and/or with other nodes or equipment to enable and/or to perform the functionality described herein. The network exposure function 20 referred to herein may be a node. For example, in some embodiments, the application function 10 may be a physical node (e.g. a physical machine) or a virtual node (e.g. a virtual machine, VM). Thus, the network exposure function 20 referred to herein may also be referred to as a network exposure function node.

As illustrated in Figure 4, the network exposure function 20 comprises processing circuitry (or logic) 22. The processing circuitry 22 controls the operation of the network exposure function 20 and can implement the method described herein in respect of the network exposure function 20. The processing circuitry 22 can be configured or programmed to control the network exposure function 20 in the manner described herein. The processing circuitry 22 can comprise one or more hardware components, such as one or more processors, one or more processing units, one or more multi-core processors and/or one or more modules. In particular implementations, each of the one or more hardware components can be configured to perform, or is for performing, individual or multiple steps of the method described herein in respect of the network exposure function 20. In some embodiments, the processing circuitry 22 can be configured to run software to perform the method described herein in respect of the network exposure function 20. The software may be containerised according to some embodiments. Thus, in some embodiments, the processing circuitry 22 may be configured to run a container to perform the method described herein in respect of the network exposure function 20.

Briefly, the processing circuitry 22 of the network exposure function 20 is configured to receive a first message from an application function 10. The first message comprises a first request to reserve resources for an application session for an application that involves multiple media types. The first message comprises one or more requirements for the transmission of the multiple media types for the application session and information indicative that the resources are for an application that involves multiple media types.

Alternatively or in addition, the processing circuitry 22 of the network exposure function 20 is configured to initiate transmission of a second message towards a policy control function. The second message comprises a second request for authorisation of a first request. The first request is a request to reserve resources for an application session for an application that involves multiple media types. The second message comprises information indicative that the resources are for an application that involves multiple media types.

As illustrated in Figure 4, in some embodiments, the network exposure function 20 may optionally comprise a memory 24. The memory 24 of the network exposure function 20 can comprise a volatile memory or a non-volatile memory. In some embodiments, the memory 24 of the network exposure function 20 may comprise a non-transitory media. Examples of the memory 24 of the network exposure function 20 include, but are not limited to, a random access memory (RAM), a read only memory (ROM), a mass storage media such as a hard disk, a removable storage media such as a compact disk (CD) or a digital versatile disk (DVD), and/or any other memory.

The processing circuitry 22 of the network exposure function 20 can be communicatively coupled (e.g. connected) to the memory 24 of the network exposure function 20. In some embodiments, the memory 24 of the network exposure function 20 may be for storing program code or instructions which, when executed by the processing circuitry 22 of the network exposure function 20, cause the network exposure function 20 to operate in the manner described herein in respect of the network exposure function 20. For example, in some embodiments, the memory 24 of the network exposure function 20 may be configured to store program code or instructions that can be executed by the processing circuitry 22 of the network exposure function 20 to cause the network exposure function 20 to operate in accordance with the method described herein in respect of the network exposure function 20. Alternatively or in addition, the memory 24 of the network exposure function 20 can be configured to store any information, data, messages, requests, responses, indications, notifications, signals, or similar, that are described herein. The processing circuitry 22 of the network exposure function 20 may be configured to control the memory 24 of the network exposure function 20 to store information, data, messages, requests, responses, indications, notifications, signals, or similar, that are described herein.

In some embodiments, as illustrated in Figure 4, the network exposure function 20 may optionally comprise a communications interface 26. The communications interface 26 of the network exposure function 20 can be communicatively coupled (e.g. connected) to the processing circuitry 22 of the network exposure function 20 and/or the memory 24 of the network exposure function 20. The communications interface 26 of the network exposure function 20 may be operable to allow the processing circuitry 22 of the network exposure function 20 to communicate with the memory 24 of the network exposure function 20 and/or vice versa. Similarly, the communications interface 26 of the network exposure function 20 may be operable to allow the processing circuitry 22 of the network exposure function 20 to communicate with any one or more nodes (e.g. the application function 10 and/or the policy control function) referred to herein. The communications interface 26 of the network exposure function 20 can be configured to transmit and/or receive information, data, messages, requests, responses, indications, notifications, signals, or similar, that are described herein. In some embodiments, the processing circuitry 22 of the network exposure function 20 may be configured to control the communications interface 26 of the network exposure function 20 to transmit and/or receive information, data, messages, requests, responses, indications, notifications, signals, or similar, that are described herein.

Although the network exposure function 20 is illustrated in Figure 4 as comprising a single memory 24, it will be appreciated that the network exposure function 20 may comprise at least one memory (i.e. a single memory or a plurality of memories) 24 that operates in the manner described herein. Similarly, although the network exposure function 20 is illustrated in Figure 4 as comprising a single communications interface 26, it will be appreciated that the network exposure function 20 may comprise at least one communications interface (i.e. a single communications interface or a plurality of communications interfaces) 26 that operates in the manner described herein. It will also be appreciated that Figure 4 only shows the components required to illustrate an embodiment of the network exposure function 20 and, in practical implementations, the network exposure function 20 may comprise additional or alternative components to those shown.

**Figure 5** illustrates a method performed by a network exposure function 20 in accordance with an embodiment. The method is for managing an application session. In some embodiments, the network exposure function 20 described earlier with reference to Figure 4 can be configured to operate in accordance with the method of Figure 5. For example, the method can be performed by or under the control of the processing circuitry 22 of the network exposure function 20.

With reference to Figure 5, at block 202, a first message is received from an application function 10. More specifically, the network exposure function 20 (e.g. the processing circuitry 21 of the network exposure function 20) receives the first message (e.g. via the communications interface 26 of the network exposure function 20). The first message comprises a first request to reserve resources for an application session for an application that involves multiple media types. The first message comprises one or more requirements for the transmission of the multiple media types for the application session and information indicative that the resources are for an application that involves multiple media types.

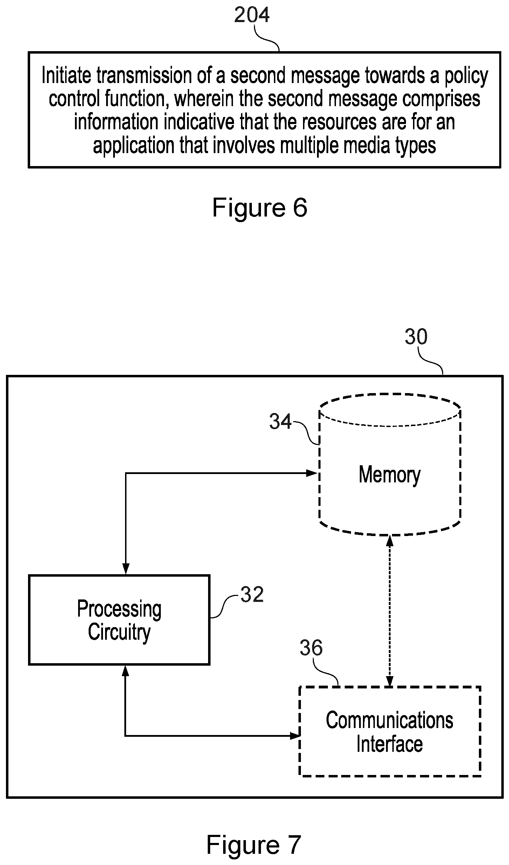

**Figure 6** illustrates a method performed by a network exposure function 20 in accordance with an embodiment. The method is for managing an application session. In some embodiments, the network exposure function 20 described earlier with reference to Figure 4 can be configured to operate in accordance with the method of Figure 6. For example, the method can be performed by or under the control of the processing circuitry 22 of the network exposure function 20.

With reference to Figure 6, at block 204, transmission of a second message is initiated towards a policy control function. More specifically, the network exposure function 20 (e.g. the processing circuitry 21 of the network exposure function 20) initiates transmission of the second message (e.g. via the communications interface 26 of the network exposure function 20). That is, the network exposure function 20 (e.g. the processing circuitry 21 of the network exposure function 20) can be configured to itself transmit the second message (e.g. via the communications interface 26 of the network exposure function 20) or can be configured to cause another node to transmit the second message. The second message comprises a second request for authorisation of a first request. The first request is a request to reserve resources for an application session for an application that involves multiple media types. The second message comprises information indicative that the resources are for an application that involves multiple media types.

**Figure 7** illustrates a policy control function (PCF) 30 in accordance with an embodiment. The policy control function 30 is for managing an application session. In some embodiments, the policy control function 30 referred to herein can refer to equipment capable, configured, arranged and/or operable to communicate directly or indirectly with the network exposure function 20 referred to herein, with the session management function referred to herein, and/or with other nodes or equipment to enable and/or to perform the functionality described herein. The policy control function 30 referred to herein may be a node. For example, in some embodiments, the policy control function 30 may be a physical node (e.g. a physical machine) or a virtual node (e.g. a virtual machine, VM). Thus, the policy control function 30 referred to herein may also be referred to as a policy control function node.

As illustrated in Figure 7, the policy control function 30 comprises processing circuitry (or logic) 32. The processing circuitry 32 controls the operation of the policy control function 30 and can implement the method described herein in respect of the policy control function 30. The processing circuitry 32 can be configured or programmed to control the policy control function 30 in the manner described herein. The processing circuitry 32 can comprise one or more hardware components, such as one or more processors, one or more processing units, one or more multi-core processors and/or one or more modules. In particular implementations, each of the one or more hardware components can be configured to perform, or is for performing, individual or multiple steps of the method described herein in respect of the policy control function 30. In some embodiments, the processing circuitry 32 can be configured to run software to perform the method described herein in respect of the policy control function 30. The software may be containerised according to some embodiments. Thus, in some embodiments, the processing circuitry 32 may be configured to run a container to perform the method described herein in respect of the policy control function 30.

Briefly, the processing circuitry 32 of the policy control function 30 is configured to receive a second message from a network exposure function 20. The second message comprises a second request for authorisation of a first request. The first request is a request to reserve resources for an application session for an application that involves multiple media types. The second message comprises information indicative that the resources are for an application that involves multiple media types.

As illustrated in Figure 7, in some embodiments, the policy control function 30 may optionally comprise a memory 34. The memory 34 of the policy control function 30 can comprise a volatile memory or a non-volatile memory. In some embodiments, the memory 34 of the policy control function 30 may comprise a non-transitory media. Examples of the memory 34 of the policy control function 30 include, but are not limited to, a random access memory (RAM), a read only memory (ROM), a mass storage media such as a hard disk, a removable storage media such as a compact disk (CD) or a digital versatile disk (DVD), and/or any other memory.

The processing circuitry 32 of the policy control function 30 can be communicatively coupled (e.g. connected) to the memory 34 of the policy control function 30. In some embodiments, the memory 34 of the policy control function 30 may be for storing program code or instructions which, when executed by the processing circuitry 32 of the policy control function 30, cause the policy control function 30 to operate in the manner described herein in respect of the policy control function 30. For example, in some embodiments, the memory 34 of the policy control function 30 may be configured to store program code or instructions that can be executed by the processing circuitry 32 of the policy control function 30 to cause the policy control function 30 to operate in accordance with the method described herein in respect of the policy control function 30. Alternatively or in addition, the memory 34 of the policy control function 30 can be configured to store any information, data, messages, requests, responses, indications, notifications, signals, or similar, that are described herein. The processing circuitry 32 of the policy control function 30 may be configured to control the memory 34 of the policy control function 30 to store information, data, messages, requests, responses, indications, notifications, signals, or similar, that are described herein.

In some embodiments, as illustrated in Figure 7, the policy control function 30 may optionally comprise a communications interface 36. The communications interface 36 of the policy control function 30 can be communicatively coupled (e.g. connected) to the processing circuitry 32 of the policy control function 30 and/or the memory 34 of the policy control function 30. The communications interface 36 of the policy control function 30 may be operable to allow the processing circuitry 32 of the policy control function 30 to communicate with the memory 34 of the policy control function 30 and/or vice versa.

Similarly, the communications interface 36 of the policy control function 30 may be operable to allow the processing circuitry 32 of the policy control function 30 to communicate with any one or more of nodes (e.g. the network exposure function 20 and/or the session management function) referred to herein. The communications interface 36 of the policy control function 30 can be configured to transmit and/or receive information, data, messages, requests, responses, indications, notifications, signals, or similar, that are described herein. In some embodiments, the processing circuitry 32 of the policy control function 30 may be configured to control the communications interface 36 of the policy control function 30 to transmit and/or receive information, data, messages, requests, responses, indications, notifications, signals, or similar, that are described herein.

Although the policy control function 30 is illustrated in Figure 7 as comprising a single memory 34, it will be appreciated that the policy control function 30 may comprise at least one memory (i.e. a single memory or a plurality of memories) 34 that operates in the manner described herein. Similarly, although the policy control function 30 is illustrated in Figure 7 as comprising a single communications interface 36, it will be appreciated that the policy control function 30 may comprise at least one communications interface (i.e. a single communications interface or a plurality of communications interfaces) 36 that operates in the manner described herein. It will also be appreciated that Figure 7 only shows the components required to illustrate an embodiment of the policy control function 30 and, in practical implementations, the policy control function 30 may comprise additional or alternative components to those shown.

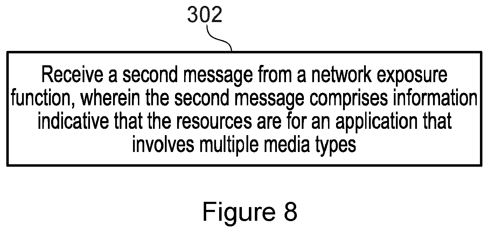

**Figure 8** illustrates a method performed by a policy control function 30 in accordance with an embodiment. The method is for managing an application session. In some embodiments, the policy control function 30 described earlier with reference to Figure 7 can be configured to operate in accordance with the method of Figure 8. For example, the method can be performed by or under the control of the processing circuitry 32 of the policy control function 30.

With reference to Figure 8, at block 302, a second message is received from a network exposure function 20. More specifically, the policy control function 30 (e.g. the processing circuitry 32 of the policy control function 30) receives the second message. The second message comprises a second request for authorisation of a first request. The first request is a request to reserve resources for an application session for an application that involves multiple media types. The second message comprises information indicative that the resources are for an application that involves multiple media types.

Although not illustrated in Figure 8, in some embodiments, the method may comprise deriving one or more quality of service (QoS) parameters for the application session in response to receiving the second message. More specifically, the policy control function 30 (e.g. the processing circuitry 32 of the policy control function 30) may derive one or more quality of service parameters for the application session according to some embodiments. The one or more quality of service parameters for the application session can be derived based on the information indicative that the resources are for an application that involves multiple media types. In some embodiments, the one or more quality of service parameters derived for the application session may be different from one or more quality of service parameters derived for an application session for an application that involves a single media type.

In some embodiments, the one or more requirements referred to herein can comprise any one or more of: one or more required quality of service (QoS) parameters for the transmission of the multiple media types; a requirement that media types having a dependency on one another are transmitted together; a requirement that media types having a dependency on one another are transmitted by a single wireless device or via a single wireless device; a requirement that media types defined as essential for the functioning of the application are transmitted together; and a requirement that media types defined as essential for the functioning of the application are transmitted by a single wireless device or via a single wireless device. In some embodiments, the one or more requirements referred to herein can comprise one or more Multi-Modal Service Requirements (MultiModalServiceReq).

In some embodiments, the information referred to herein (which is indicative that the resources are for an application that involves multiple media types) can be in the form of an identifier (ID), such as a Multi-Modal Service ID or a Multi-Modality Communication Identifier (MMCI). In some embodiments, the information referred to herein (which is indicative that the resources are for an application that involves multiple media types) can also be indicative of any one or more of the types of multiple media that the application involves, an instance of the application that involves multiple media types, and a name of a provider of the application that involves multiple media types.

In some embodiments, the multiple media types referred to herein can comprise any two or more of audio data, video data, sensor data (e.g. brightness, temperature, humidity, etc), haptic data (e.g. pressure, texture, vibration, temperature; or kinaesthetic senses, e.g. gravity, pull forces, sense of position awareness), and any other media type.

There is further provided a method performed by a system. The method performed by the system comprises the method described herein with respect to any two or more of the application function 10, the network exposure function 20, and the policy control function 30. There is also provided a system comprising any two or more of the application function 10 described herein, the network exposure function 20 described herein, and the policy control function 30 described herein.

The techniques described herein enable an external party, such as an AF 10 (e.g. an AS), to provide service requirements for multi-modal (XRM) applications that may comprise one or multiple sessions, e.g. UE PDU sessions. In addition, the techniques described herein enable the AF 10 to provide an additional attribute that characterises the service data flow. This allows the 5GC to apply, for example, different QoS policies for data flows that are part of a multi-modal application compared to the same data flows from a single-modal application.

According to some embodiments, the techniques described herein provide a new mechanism for an external AF 10 to achieve QoS policy coordination of multi-modality flows for a single UE or multiple UEs. The techniques described herein allow the AF (e.g. AS) 10 to retain control over all UEs/PDU sessions and data flows that comprise a multi-modal application. Hence, for example, the application may require a different set of QoS parameters for each data stream, to enable/disable each device independently, and/or to resolve error conditions according to application layer logic. The techniques described herein can comply with the requirements identified by Key Issue #1 and #2 in 3GPP TR 23.700-60. The techniques described herein can be realised with minimum system impact on current 5GS capabilities by reusing and expanding existing procedures for an AF session with required QoS.

According to the key issue description in 3GPP TS 23.700-60, clause 5.1 and 5.2, there are two aspects to be addressed: (i) application synchronisation and, (ii) QoS policy coordination.

Application synchronisation can refer to media synchronisation. This can be to ensure that related tactile and multi-modal data (e.g. any two or more of audio, video and haptic data related to a specific time) is delivered by the application to the user at a similar time. There are requirements about the synchronisation threshold between two or more modalities (e.g. audio-tactile, or visual-tactile) specified in 3GPP TS 22.261 and 3GPP TS 22.847. However, it is a misconception to think that media synchronisation can be achieved by ensuring that all modalities are transmitted at the same time and/or have the same maximum end-to-end latency. Media synchronisation requires that data from two or more modalities is synchronised to a common timeline when presented to the end user or received at the client application.

The techniques described herein propose to achieve media synchronisation by using application-level mechanisms, as described in Solution #40, which proposes to reuse the mechanisms used by IMS for media synchronisation (refer to 3GPP TS 26.114, chapter 7.5.3, that mandates to use RTCP Sender Reports for media synchronisation according to Internet Engineering Task Force (IETF) request for comments (RFC) 3550). A requirement may be to have a common time or clock (e.g. wall-clock time) for all data flows that need to be in sync. In the case of multiple UEs, there are 3GPP mechanisms to achieve a common clock, e.g. using the timing information provided by gNodeB in System Information Block 9, SIB9 (see 3GPP TS 38.331 V17.1.0). SIB9 contains information related to Global Positioning System (GPS) time and Coordinated Universal Time (UTC).

QoS policy coordination of multi-modality flows for a single UE (Key Issue #1) or multiple UEs (Key Issue #2) may be best achieved by the application client and server that handles all required data flows / streams.
- Each of the data streams that comprise a multi-modal application, in general, may require a different set of QoS parameters.
- Each data stream may follow a separate transmission path, i.e. use a different PDU session, on a different DNN or network slice.
- Some data streams may not require any coordination or media synchronization, for example a temperature sensor may not need to be coordinated with other media, but provide a constant flow of ambient information.
- Applications may need to be able to control each data stream independently, in terms of enabling, disabling and/or setting the conditions for the device to deliver the data stream.
- XRM applications may provide service requirements (including QoS information) when the XRM session is initiated. It may not be possible for the application to provide the Flow Description(s) before the PDU session is established, if server IP address/port is allocated on demand.

On the other hand, some data streams may be fully inter-dependent, in the sense that they are all necessary for the multi-modal application to function correctly. But, even in such a case, it can be up to the application layer to decide what to do in case one of the (single-modal) data stream fails. For example, a video conference call requires both audio and video data streams to be successfully delivered. If the video stream fails, the conference call can continue only with audio (impacting the user experience, but still allowing communication). However, if the audio stream fails the conference call is typically terminated.

The techniques described herein propose that those data streams (or set of data streams) that are (e.g. closely) related and require (e.g. strong) application coordination for (e.g. correct) delivery of a multi-modal application, are transmitted in a single (e.g. PDU) session, such as by a single UE (either via a single device or multiple devices connected to a single UE that can access the 5GS). This enables the application (e.g. AF/AS) to handle multiple medias in a single procedure and single AF session. However, those data streams (or set of data streams) that contribute to the immersive experience, but may still be valid stand-alone, may be transmitted over separate (e.g. PDU) sessions from multiple UEs.

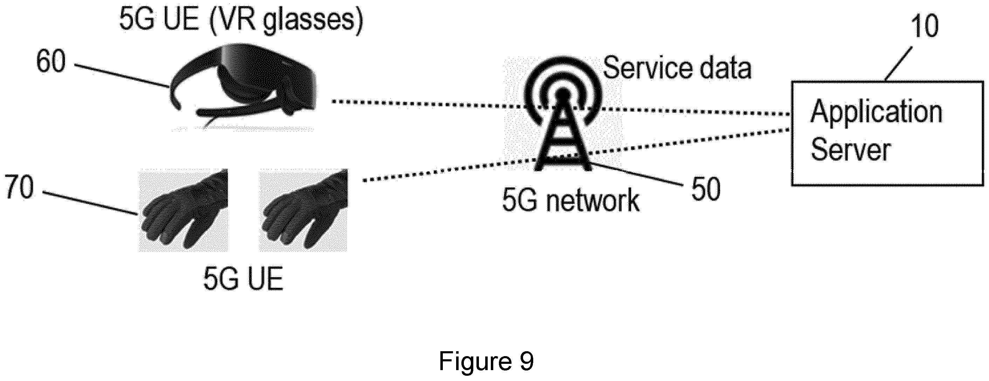

**Figure 9** is a schematic illustration of an example use case. The example use case is provided from 3GPP TR 22.847, chapter 5.1. The example use case is an immersive multi-modal Virtual Reality (VR) application. The VR system consists of two separate wireless devices, e.g. UEs (VR glasses 60 and gloves 70). These two separate wireless devices are connected to the 5G network 50 as independent wireless devices. The VR glasses 60 generate positioning and view information that is closely inter-related, but can function with or without the haptic and sensing data generated by the VR gloves 70. The application function (e.g. server) 10 referred to herein can communicate with the wireless devices 60, 70 via the 5G network 50.

For multi-modality flows transmitted by a single UE (Key Issue #1), all required application coordination can be achieved by re-using existing 5GS mechanisms. The functionality provided by the Npcf_PolicyAuthorization service (3GPP TS 29.514) allows the AF/NEF to provide service information to the PCF and request specific QoS, charging, subscribe to events, etc. The service information provided by the AF/NEF consists of media components and media sub-components. Hence, different data streams of the multi-modal application can be mapped onto different media components. This is the current mechanism used by IMS to setup video calls. Extensions to the Npcf_PolicyAuthorization service may be needed to best accommodate XR applications. The procedure for AF session setup with required QoS (clause 4.15.6.6 of TS 23.502) can be reused for untrusted AFs interacting with NEF. However, current Nnef_AFsessionWithQoS service (3GPP TS 29.522) does not allow the AF to provide information for multiple medias.

A first option ("Option 1") is to extend the existing Nnef_AFsessionWithQoS service to allow the AF to provide service information for multi-modal (XRM) applications. A second option ("Option 2") is to define a new NEF service/API for multi-modal (XRM) applications. Option 1 has less system impacts than Option 2. The current specification for Nnef_AFsessionWithQoS is fully extensible in a backwards compatible way. On the other hand, Option 2 allows single-modal applications to either keep using the legacy API or the new API (which may lead to inter-operability issues). The benefit of Option 2 is that it allows the service attributes, operations, and associated logic to be specified, specifically for the needs of multi-modal applications.

In an example, the (non-comprehensive) proposal for the specification of the new NEF service can be as follows. A new service is provided by the NEF, namely "Nnef_MultiModalService". The description of the service is that it is used to provide service requirements for multi-modal applications, e.g. as well as subscription and notification of QoS flow level events. The operations of the service can include any one or more of a create operation, an update operation, a terminate operation, and a notify operation. The attributes of the service can include any one or more of an AF identifier, a UE address, one or more multi-modal service requirements (e.g. for each media that comprise the multi-modal service), subscription to events, a UE identity, a DNN, and Single Network Slice Selection Assistance Information (S-NSSAI). The multi-modal service requirements can, for example, comprise any one or more of Flow description(s), an External Application Identifier, a QoS Reference, individual QoS parameters, and Alternative QoS Related parameters.

For multi-modality flows transmitted by multiple UEs (Key Issue #2), the techniques described herein propose to extend the existing mechanisms for AF session setup with required QoS with an additional attribute that characterises the service data flow. This allows 5GC to apply different QoS policies for data flows that are part of a multi-modal application, compared to the same data flows from a single-modal applications.

A Multi-Modality Communication Identifier (MMCI) can be used to indicate that the created individual application session context resource relates to a tactile or multi-modal communication service. It may also include the name of the multi-modal service provider, a qualifier to further characterise the type of multi-modal service, and/or a specific instance of the multi-modal service. There is no need to hide from the application that there are multiple UEs involved in the multi-modality service. For the example use case of the VR system described above with reference to Figure 9, the application 10 may manage each device (VR glasses 60 and gloves 70) via separate procedures, but allocate the same MMCI.

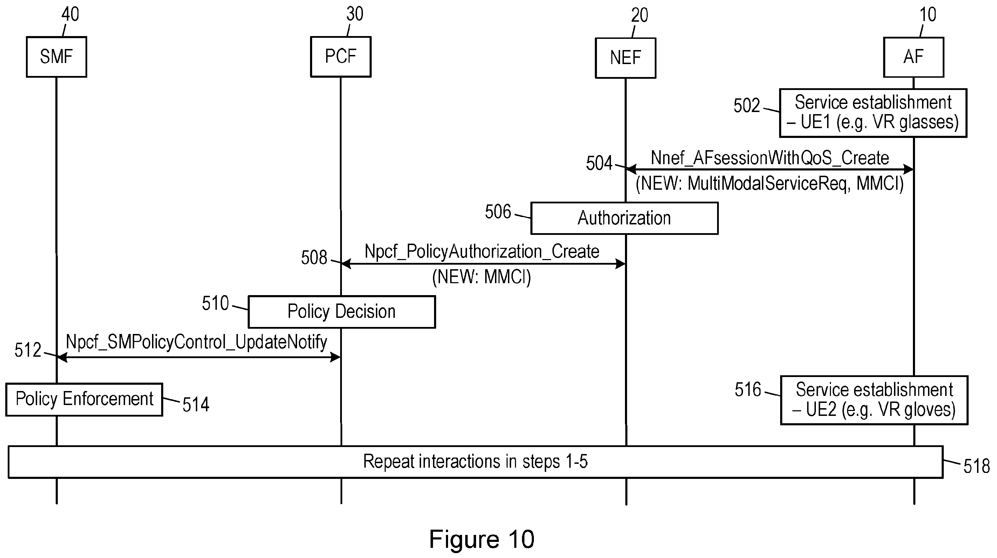

Figure 10 is a signalling diagram illustrating an exchange of signals in a system according to an embodiment. The system illustrated in Figure 10 comprises an application function (AF) 10, a network exposure function (NEF) 20, a policy control function (PCF) 30, and a session management function (SMF) 40. The AF 10 can be as described earlier with reference to Figures 2 and 3, the NEF 20 can be as described earlier with reference to Figures 4, 5, and 6, and the PCF 30 can be as described earlier with reference to Figures 7 and 8.

As illustrated by block 502 of Figure 10, the AF 10 may perform service establishment for a first wireless device, such as a first UE (UE1). UE1 can be any type of UE, such as the VR glasses 60 mentioned earlier with respect to Figure 9.

As illustrated by arrow 504 of Figure 10, the AF 10 transmits a first message towards the NEF 20. The first message comprises a first request. The NEF 20 thus receives the first message comprising the first request from the AF 10. The first request is a request to reserve resources for an application (or AF) session. The first message can be in the form of an Nnef_AFsessionWithQoS_Create request message. Advantageously, the first request comprises two new attributes via which the AF 10 can provide service information for multi-modal (XRM) applications.

The first new attribute is one or more requirements for the transmission of the multiple media types for the application session, such as any one or more of those mentioned earlier. In some embodiments, the one or more requirements can comprise one or more Multi-Modal Service Requirements (MultiModalServiceReq), such as for each media that comprise the multi-modal service. The one or more Multi-Modal Service Requirements can, for example, comprise any one or more of Flow description(s), an External Application Identifier, a QoS Reference, individual QoS parameters, and Alternative QoS Related parameters. The second new attribute is information indicative that the resources are for an application that involves multiple media types. In some embodiments, the information can be in the form of an identifier, such as the Multi-Modal Service ID or MMCI mentioned earlier.

As illustrated by block 506 of Figure 10, the NEF 20 may authorise the first request from the AF 10. The NEF 20 can also map the different data streams of the multi-modal application provided by the AF 10 onto different media components and subcomponents. The NEF 20 can interact with the PCF 30. Specifically, as illustrated by arrow 508 of Figure 10, the NEF 20 transmits a second message towards the PCF 30. The second message comprises a second request. The PCF 30 thus receives the second message comprising the second request from the NEF 20. The second message can be in the form of an Npcf_PolicyAuthorization_Create request message. The second message to the PCF 30 comprises the second new attribute, which is the information indicative that the resources are for an application that involves multiple media types (e.g. the MultiModal Service ID or MMCI).

As illustrated by block 510 of Figure 10, the PCF 30 may determine whether the second request is authorised. The PCF 30 can derive one or more QoS parameters for the application session based on the information indicative that the resources are for an application that involves multiple media types. For example, the PCF 30 can derive one or more required QoS parameters based on the information provided by the NEF 20 considering the multi-modal specific information, such as the Multi-Modal Service ID or MMCI. As illustrated by arrow 512 of Figure 10, the PCF 30 may transmit a third message towards the SMF 40. The third message may comprise a third request. The SMF 40 thus may receive the third message comprising the third request from the PCF 30. The third message can be in the form of an Npcf_SMPolicyControl_UpdateNotify request message. The third message can comprise updated policy information for a requested multi-modal service, e.g. within an affected PDU session. As illustrated by block 514 of Figure 10, the SMF 40 may enforce the updated policy information.

As illustrated by block 516 of Figure 10, the AF 10 may perform service establishment for a second wireless device, such as a second UE (UE2). UE2 can be a different UE from UE1. UE2 can be any type of UE, such as the VR gloves 70 mentioned earlier with respect to Figure 9. When UE2 initiates a communication, as illustrated by block 518 of Figure 10, the previously described steps 504 to 512 may be repeated in respect of UE2. That is, the AF 10 may send a fourth message comprising a fourth request to the NEF 20, which may comprise the needed resources (as in step 504) and the same information (e.g. Multi-Modal Service ID or MMCI) as for UE1. The process then continues accordingly.

There is also provided a computer program comprising instructions which, when executed by processing circuitry (such as the processing circuitry 12 of the application function 10 described herein, the processing circuitry 22 of the network exposure function 20 described herein, and/or the processing circuitry 32 of the policy control function 30 described herein), cause the processing circuitry to perform at least part of the method described herein. There is provided a computer program product, embodied on a non-transitory machine-readable medium, comprising instructions which are executable by processing circuitry (such as the processing circuitry 12 of the application function 10 described herein, the processing circuitry 22 of the network exposure function 20 described herein, and/or the processing circuitry 32 of the policy control function 30 described herein) to cause the processing circuitry to perform at least part of the method described herein. There is provided a computer program product comprising a carrier containing instructions for causing processing circuitry (such as the processing circuitry 12 of the application function 10 described herein, the processing circuitry 22 of the network exposure function 20 described herein, and/or the processing circuitry 32 of the policy control function 30 described herein) to perform at least part of the method described herein. In some embodiments, the carrier can be any one of an electronic signal, an optical signal, an electromagnetic signal, an electrical signal, a radio signal, a microwave signal, or a computer-readable storage medium.

In some embodiments, the functionality (e.g. of the application function 10, network exposure function 20, and/or policy control function 30) described herein can be performed by hardware. Thus, in some embodiments, the application function 10 described herein, the network exposure function 20 described herein, and/or the policy control function 30 described herein can be hardware. However, it will also be understood that optionally at least part or all of the functionality (e.g. of the application function 10, network exposure function 20, and/or policy control function 30) described herein can be virtualized. For example, the functions performed by the application function 10 described herein, the network exposure function 20 described herein, and/or the policy control function 30 described herein can be implemented in software running on generic hardware that is configured to orchestrate them. Thus, in some embodiments, the application function 10 described herein, the network exposure function 20 described herein, and/or the policy control function 30 described herein can be virtual. In some embodiments, at least part or all of the functionality (e.g. of the application function 10, network exposure function 20, and/or policy control function 30) described herein may be performed in a network enabled cloud. Thus, the method described herein can be realised as a cloud implementation according to some embodiments. The functionality (e.g. of the application function 10, network exposure function 20, and/or policy control function 30) described herein may all be at the same location or at least some of the functionality may be distributed.

It will be understood that at least some or all of the method steps described herein can be automated in some embodiments. That is, in some embodiments, at least some or all of the method steps described herein can be performed automatically. The methods described herein can be computer-implemented methods.

The techniques described herein include advantageous techniques for managing application sessions. The appendices define some embodiments of the disclosure.

The application is solely limited by the scope of the appended claims. The word "comprising" does not exclude the presence of elements or steps other than those listed in a claim, "a" or "an" does not exclude a plurality, and a single processor or other unit may fulfil the functions of several units recited in the claims. Any reference signs in the claims shall not be construed so as to limit their scope.

### Appendix 1

| | | |
|---|---|---|
| **SA WG2 Meeting #S2-152e(e-meeting)** | | **S2-220xxxx** |
| **17 - 26 August 2022, Electronic Meeting** | | **(revision of S2-220xxxx)** |
| **Source:** | **Ericsson** | |
| **Title:** | **Solutions evaluation for KI#1 and KI#2** | |
| **Document for:** | **Approval** | |
| **Agenda Item:** | **9.19** | |
| **Work Item** / **Release:** | **FS_XRM** / **Rel-18** | |
| *Abstract of the contribution: This contribution provides evaluation of the solutions forKey Issue #1 and Key Issue #2* | | |

### 1. Introduction

This contribution provides evaluation of the solutions documented in the FS_XRM TR 23.700-60 for Key Issue #1 and Key Issue #2

### 2. Proposal

This paper proposes the following updates to TR 23.700-60 clause 7, with respect to the evaluation of solutions for Key Issue #1 and Key Issue #2. Both key issues #1 and #2 are evaluated together as they are closely related and several solutions aim at resolving both key issues

### * Start of changes *

### 7 Overall Evaluation

Editor's note: This clause provides evaluations of different solutions.

### 7.1 Evaluation of KI#1 and KI#2

**Solution #1** (for KI #1) introduces a new QoS parameter for delay difference between couple of flows, but it does not specify how such QoS parameter can be enforced, used by RAN or monitored. In addition, application synchronization should not be limited to two flows, but it may be required between multiple (more than 2) flows. Finally, the solution does not work when the synchronization threshold between two or more modalities is less than the latency KPI for the application.

**Solution #36** (for KI #1) proposes to perform policy control for multiple flows all together, as an atomic operation that may only be fully successful or fail. But such approach is incorrect. It is up to the application layer to decide what to do in case one of the data stream fails. For example, a video conference call requires both audio and video data streams to be successfully delivered. If the video stream fails, the conference call can continue only with audio (impacting the use experience, but still allowing communication). However, if the audio stream fails the conference call is typically terminated.

A better approach is that 5GC notifies the AF when one of the data streams fails to be established or can no longer be maintained (by following existing procedure in Npcf_Policy Authorization service), so that the application layer can take the necessary actions.

Solution #39 does not resolve the challenges identified by the KI #1, but reuses existing PCF URSP functionality to ensure all data flows that belong to the same XRM service application are transferred on the same PDU session. This may be used as a complement to other solutions, but it does not address the key issue.

**Solution #40** resolves the synchronization of media flows associated to multi-modality traffic, by reusing application layer-based solutions, such us the solution based on SIP/SDP/RTP+RTCP for IMS traffic. However, the solution does not mention the need to have a common wall-clock time for all data flows that need to be in sync, from different UEs. The solution also resolves the issue of QoS policy coordination between multiple QoS flows of a single UE, in the scenario of trusted AF, but fails to identify impacts on NEF northbound APIs for the scenario of untrusted AFs. Also it is not clear how the solution provides QoS policy coordination between multiple QoS flows from multiple UEs (see editor's note).

**Solution #37** addresses KI#2. The solution contains two aspects: (i) provisioning of group policy information to UDR via NEF, and (ii) interactions to update individual UE policy with PCF coordination
- Provisioning of group policy information is not useful, as each of the data streams that comprise a multi-modal application, in general, requires a different set of QoS parameters (see for example requirements for audio, video, sensor and haptic feedback provided in 3GPP TS 22.847)
- The solution does not specify how the latency threshold parameter can be enforced or used by RAN or 5GC
- Providing policy information before PDU session establishment is a waste of resources. It is more efficient to provide those parameters on demand, when the XRM session is initiated. In addition, it may not be able for the application to provide the Flow Description(s) before the PDU session is establish, if server IP address/port is allocated on demand.
- When the AF modifies the policy for a specific traffic flow of one UE, it is not necessary to update other traffic flows. The examples provided in the solution are not correct, as a multi-modal application may comprise some data streams that require higher priority level (e.g. audio) or PDB (e.g. haptic feedback) than the others. Applications need to be able to control each data stream independently.
- Allowing both NEF and PCF update application data in UDR is not a good design pattern, as this may create inconsistencies and race conditions

**Solution #38** proposes that UDM allocates a Coordination Identifier for the tactile and multi-modal communication service, which is out of the scope of current UDM responsibilities. Such coordination identifier, if needed, would be best allocated by the application layer. In addition, it may not be able for the application to provide service parameters (e.g. Flow Descriptions) before the PDU session is establish, as application server IP address/port are typically allocated on demand. It is more efficient that the AF provide the service parameters at the time the XRM session is initiated. Finally, the solution is complex and significant impacts on 5GC (AMF, SMF, PCF, NEF, UDM, UDR) and also impacts on the UE.

**Solution #2** assumes that a modification of the policy requirements for (via Nnef_ AFsessionWithQos_Update) for one of the data streams that comprise a multi-modal application, has a necessary effect on other data streams that belong to the same multimodal application. However, this is not really the case, as the application may want to modify one data stream only. Hence the procedure proposed is inefficient and over-complicated. Moreover, the PCF cannot know how the modification of one data stream may impact other ongoing data streams. It is up to the application layer to control impacts on each data stream. Extensive configuration would be required in the PCF (that contains no application business logic) to take those decisions, which makes the solution impractical. In addition, the procedure proposed is incomplete (see editor's notes)

**Solution #3** complements solution #2 with a proposal to ensure the same PCF is selected for multiple UE's PDU sessions that comprise a multi-modal application. However, this is only possible in some scenarios. If data streams use different DNN or network slices, and there is a specific PCF instance to handle such DNN or network slice, then it is not possible to select the same PCF. Moreover, the reason stated to select the same PCF is that the policy authorized to the AF session of each UE in the group may be adjusted due to the policy change of another UE in the same group. However, such logic cannot be held in the PCF. How the modification of AF session in one UE may impact another UE session needs to be under the control of the application layer (see also evaluation for solution #2). Finally, the Internal Group ID information is already provided by the SMF to the PCF during PDU session establishment, so there is no need to store such information in the UDR.

**Solution #4** proposes a complex procedure for QoS policy coordination for multiple UEs, that builds on the existing procedures for AFsessionWithQoS. The following aspects of the solution are considered inefficient
- Having a single procedure for AFsessionWithQoS for multiple UEs, increases the complexity of NEF logic and northbound APIs without delivering more flexibility to the AF or being more efficient. This is because not all UEs that are part of a multi-modal application initiate communication at the same time. An example scenario is described in 3GPP TS 22.847: "In another scenario, the devices associated to the same tactile and multi-modal communication service may be triggered to wake up by the discovery of a tactile and multi-modality capable user/UE in proximity". Hence, using a single AF-NEF interaction to handle multiple UE sessions, is more troublesome than letting the AF handling each UE session independently.
- The procedure proposed is subject of inconsistencies and race conditions, as the PCF2 needs to update the multi-modal information in the BSF (step 15-16), before another PCF2 can discover the relationship with PCF1 (step 17)
- Subscription from PCF1 to notification of events from PCF2 is not useful, as the PCF does not have the necessary application layer logic to act upon events from another UE PDU session. It is up to the application function to trigger actions on a UE PDU session (if required) upon events occurring in another UE PDU session, according to the nature of the event, the data stream affected, the characteristics of the multi-modal application, etc. Moreover, impacts to the Npcf_Policy_Authorization_Subscribe operation are not clearly described.
- Inconsistencies and race conditions may arise if both, PCF and AF, subscribe to notification of events for an application session context, and take different actions.

**Solution #XX** proposes that those data streams that are closely related and require strong application coordination for correct delivery of a multi-modal application, are transmitted in a single PDU session by a single UE. However, those data streams that contribute to the immersive experience, but may still be valid stand-alone, may be transmitted over separate PDU sessions from multiple UEs. The solution extends the existing procedures for AF session with required QoS, to enable the AF to provide service information for multi-modal (XRM) applications and characterize the service data flow with a new Muti-modality Communication Identifier (MMCI) attribute.

This allows the application server retain control over all UEs/PDU sessions and data flows that comprise a multi-modal application. Hence, the application may require a different set of QoS parameters for each data stream, enable/disable each device independently, and resolve error conditions according to application layer logic.

This solution complies with the requirements identified by Key Issue #1 and #2; and can be realized with minimum system impacts on current 5GS capabilities

### * End of change *

### Appendix 2

| | | |
|---|---|---|
| **SA WG2 Meeting #S2-152e(e-meeting)** | | **S2-220xxxx** |
| **17 - 26 August 2022, Electronic Meeting** | | **(revision of S2-220xxxx)** |
| **Source:** | **Ericsson** | |
| **Title:** | **Solution X: Policy control and exposure for multi-modality services** | |
| **Document for:** | **Approval** | |
| **Agenda Item:** | **9.19** | |
| **Work Item / Release:** | **FS_XRM / Rel-18** | |
| *Abstract of the contribution: This contribution provides a new solution to Key Issue # 1 and Key Issue # 2* | | |

### 1. Introduction

This contribution provides a new solution to Key Issue #1 and Key Issue #2 documented in the FS_XRM TR 23.700-60.

### 2. Proposal

This paper proposes the following updates to TR 23.700-60 clause 6, to introduce a new solution to Key Issue #1 and Key Issue #2

### * Start of changes *

### 6.X Solution #X: Policy control and exposure for multi-modality services

### 6.X.1 Key Issue mapping

This solution addresses KI#1 and KI#2 and enables policy control and network capability exposure for multi-modality services in both scenarios for a single UE and among multiple UEs

### 6.X.2 Description

According to the key issue description, there are two aspects to be addressed: (i) application synchronization and, (ii) QoS policy coordination
Application synchronization refers to media synchronization. This is to ensure that related tactile and multi-modal data (e.g. audio, video and haptic data related to a specific time) is delivered by the application to the user at a similar time. There are requirements about the synchronization threshold between two or more modalities (for example audio-tactile, or visual-tactile) specified in 3GPP TS 22.261 and 3GPP TS 22.847
However, it is a misconception to think that media synchronization can be achieved by ensuring that all modalities are transmitted at the same time and/or have the same maximum end-to-end latency. Media synchronization requires that data from two or more modalities is synchronized to a common timeline when presented to the end user or received at the client application.

This solution proposes to achieve media synchronization by using application-level mechanisms, as described in solution #40 that proposes to reuse the mechanisms used by IMS for media synchronization (refer to 3GPP TS 26.114, chapter 7.5.3, that mandates to use RTCP Sender Reports for media synchronization according to RFC 3550). The requirement is to have a common wall-clock time for all data flows that need to be in sync. In the case of multiple UEs, there are 3GPP mechanism to achieve a common clock, e.g. using the timing information provided by gNodeB in SIB9 (see 3GPP TS 38.331 V17.1.0).

QoS policy coordination of multi-modality flows for a single UE (KI #1) or multiple UEs (KI #2) is best achieved by the application client and server that handles all required data flows / streams.
- Each of the data streams that comprise a multi-modal application, in general, requires a different set of QoS parameters
- Each data stream may follow a separate transmission path, i.e. use a different PDU session, on a different DNN or network slice
- Some data streams do not require any coordination or media synchronization, for example a temperature sensor may not require to be coordinated with other media, but provide a constant flow of ambient information
- Applications need to be able to control each data stream independently, in terms of enabling, disabling or setting the conditions for the device to deliver the data stream
- XRM applications provide service requirements (including QoS info) when the XRM session is initiated. It may not be possible for the application to provide the Flow Description(s) before the PDU session is establish, if server IP address/port is allocated on demand

On the other hand, some data streams may be fully inter-dependent, in the sense that they are all necessary for the multi-modal application to function correctly. But even in such case, it is up to the application layer to decide what to do in case one of the (single-modal) data stream fails. For example, a video conference call requires both audio and video data streams to be successfully delivered. If the video stream fails, the conference call can continue only with audio (impacting the use experience, but still allowing communication). However, if the audio stream fails the conference call is typically terminated.

This solution proposes that those data streams (or set of data streams) that are closely related and require strong application coordination for correct delivery of a multi-modal application, are transmitted in a single PDU session by a single UE (either via a single device or multiple devices connected to a single UE that can access the 5GS). This enables the application (AF/AS) to handle multiple medias in a single procedure and single AF session. However, those data streams (or set of data streams) that contribute to the immersive experience, but may still be valid stand-alone, may be transmitted over separate PDU sessions from multiple UEs.

An example use case is provided in 3GPP TR 22.847, chapter 5.1 (Immersive multimodal Virtual Reality (VR) application). The VR system consists of two separate devices (VR glasses and gloves) connected to the 5GS as independent 5G UEs. The VR glass device generates positioning and view information that is closely inter-related, but can function with or without the haptic and sensing data generated by the VR gloves.

Figure 9 illustrates an immersive multi-modal VR application with multiple 5G UEs directly connected to 5G network.

For multi-modality flows transmitted by a **single UE** (KI #1), all required application coordination can be achieved by re-using existing 5GS mechanisms. The functionality provided by the Npcf_Policy Authorization service (3GPP TS 29.514) allows the AF/NEF to provide service information to the PCF and request specific QoS, charging, subscribe to events, etc. The service information provided by the AF/NEF consists of media components and media sub-components. Hence, different data streams of the multi-modal application, can be mapped onto different media components.
- Note that this is the current mechanism used by IMS to setup video calls. Extensions to the Npcf_Policy Authorization service may be needed to best accommodate XR applications

The procedure for AF session setup with required QoS (clause 4.15.6.6 of TS 23.502), can be reused for untrusted AFs interacting with NEF. However, current Nnef_AFsessionWithQoS service (3GPP TS 29.522) does not allow the AF to provide information for multiple medias
- Option 1. Extend the existing Nnef_AFsessionWithQoS service to allow the AF to provide service information for multi-modal (XRM) applications
- Option 2. Define a new NEF service/API for multi-modal (XRM) applications

Option 1 has less system impacts and so it is the preferred alternative. Note that the current specification for Nnef_AFsessionWithQoS is fully extensible in a backwards compatible way. On the other hand, option 2 (define a new NEF service/API) opens the option for single-modal applications to either keep using the legacy API or the new API (which may lead to inter-operability issues).

For multi-modality flows transmitted by **multiple UEs** (KI #2), the solution proposes to extend the existing mechanisms for AF session setup with required QoS with an additional attribute that characterize the service data flow. This allows 5GC to apply different QoS policies for data flows that are part of a multi-modal application, compared to the same data flows from a single-modal applications.
- Muti-modality Communication Identifier (MMCI): Indicates that the created Individual Application Session Context resource relates to a tactile or multimodal communication service. It may also include the name of the multi-modal service provider, a qualifier to further characterize the type of multi-modal service or a specific instance of multi-modal service.

There is no need to hide to the application that there are multiple UEs involved in the multi-modality service. For the example use case of the VR system described above. The application will manage each device (VR glasses and gloves) via separate procedures, but allocate the same MMCI.

### 6.X.3 Procedures

Figure 10 represents a high-level procedure of the solution, based on the procedure described in 3GPP TS 23.502 clause 4.15.6.6.

Step 504. The AF sends a request to reserve resources for an AF session using Nnef_AFsessionWithQoS_Create request message. The request includes two new attributes where the AF provides service information for multi-modal (XRM) applications
- Multi-modal Service Requirements (MultiModalServiceReq): Flow description(s) or External Application Identifier, QoS Reference, etc for each media that comprise the multi-modal service
- Muti-modality Communication Identifier (MMCI)

Steps 506-508. The NEF authorizes the AF request, maps the different data streams of the multi-modal application provided by the AF onto different media components and subcomponents, and interacts with the PCF by triggering a Npcf_Policy_Authorization_Create request. The request to the PCF includes the MMCI (Muti-modality Communication Identifier)
Steps 510-512. The PCF determines whether the request is authorized, derives the required QoS parameters based on the information provided by the NEF and issues a Npcf_SMPolicyControl_UpdateNotify request to the SMF with updated policy information, for the affected PDU session
Steps 516-518. When another device (UE2) initiates the communication, the AF request the needed resources (as in step 1), including the same MMCI as for the first device (UE1)

### 6.X.4 Impacts on services, entities and interfaces

NEF
   - Extend the existing Nnef_AFsessionWithQoS service to allow the AF to provide service information for multi-modal (XRM) applications and include the new attribute Muti-modality Communication Identifier (MMCI)
   - Map data streams of the multi-modal application provided by the AF onto different media components and subcomponents
PCF
   - Support the new attribute MMCI (Muti-modality Communication Identifier) to authorize the request received from NEF and derive the required QoS parameters
AF
   - Provide service information for multi-modal (XRM) applications to the NEF and include the new attribute Muti-modality Communication Identifier (MMCI)

* End of change *

## Claims

1. A method for managing an application session, wherein the method is performed by an application function (10), the method comprising:
transmitting (102, 504) a first message towards a network exposure function (20), wherein the first message comprises a first request to reserve resources for an application session for an application that involves multiple media types;
**characterized in that** the first message comprises one or more requirements for the transmission of the multiple media types for the application session and information indicative that the resources are for an application that involves multiple media types, wherein the one or more requirements comprise any one or more of:
one or more required quality of service, QoS, parameters for the transmission of the multiple media types;
a requirement that media types having a dependency on one another are transmitted together;
a requirement that media types having a dependency on one another are transmitted by a single wireless device or via a single wireless device;
a requirement that media types defined as essential for the functioning of the application are transmitted together; and
a requirement that media types defined as essential for the functioning of the application are transmitted by a single wireless device or via a single wireless device.

2. A method as claimed in claim 1, wherein:
the information is indicative of any one or more of:
the types of multiple media that the application involves;
an instance of the application that involves multiple media types; and
a name of a provider of the application that involves multiple media types.

3. A method as claimed in any of the preceding claims, wherein:
the information is in the form of an identifier; and/or
the multiple media types comprise any two or more of audio data, video data, sensor data, and haptic data.

4. A method for managing an application session, wherein the method is performed by a network exposure function (20), the method comprising:
receiving (202, 504) a first message from an application function (10), wherein the first message comprises a first request to reserve resources for an application session for an application that involves multiple media types;
**characterized in that** the first message comprises one or more requirements for the transmission of the multiple media types for the application session and information indicative that the resources are for an application that involves multiple media types, wherein the one or more requirements comprise any one or more of:
a requirement that media types having a dependency on one another are transmitted together;
a requirement that media types having a dependency on one another are transmitted by a single wireless device or via a single wireless device;
a requirement that media types defined as essential for the functioning of the application are transmitted together; and
a requirement that media types defined as essential for the functioning of the application are transmitted by a single wireless device or via a single wireless device.

5. A method as claimed in claim 4, comprising:
transmitting (204, 508) a second message towards a policy control function (30), wherein the second message comprises a second request for authorisation of the first request; and
wherein the second message comprises information indicative that the resources are for an application that involves multiple media types.

6. A method as claimed in claim 4 or 5, wherein:
the information is indicative of any one or more of:
the types of multiple media that the application involves;
an instance of the application that involves multiple media types; and
a name of a provider of the application that involves multiple media types.

7. A method as claimed in any one of claims 4 to 6, wherein:
the information is in the form of an identifier; and/or
the multiple media types comprise any two or more of audio data, video data, sensor data, and haptic data.

8. A method for managing an application session, the method comprising:
transmitting (102, 504), by an application function (10), a first message towards a network exposure function (20), wherein the first message comprises a first request to reserve resources for an application session for an application that involves multiple media types;
**characterized in that** the first message comprises one or more requirements for the transmission of the multiple media types for the application session and information indicative that the resources are for an application that involves multiple media types, wherein the one or more requirements comprise any one or more of:
one or more required quality of service, QoS, parameters for the transmission of the multiple media types;
a requirement that media types having a dependency on one another are transmitted together;
a requirement that media types having a dependency on one another are transmitted by a single wireless device or via a single wireless device;
a requirement that media types defined as essential for the functioning of the application are transmitted together; and
a requirement that media types defined as essential for the functioning of the application are transmitted by a single wireless device or via a single wireless device;
the method further comprising transmitting (204, 508), by the network exposure function (20), a second message towards a policy control function (30), wherein the second message comprises a second request for authorisation of the first request; and
wherein the second message comprises information indicative that the resources are for an application that involves multiple media types;
in response to receiving (508) the second message, deriving (510), by the policy control function (30), one or more quality of service parameters for the application session based on the information indicative that the resources are for an application that involves multiple media types.

9. A method as claimed in claim 9, wherein:
the one or more quality of service parameters derived for the application session are different from one or more quality of service parameters derived for an application session for an application that involves a single media type.

10. A method as claimed in claim 8 or 9, wherein:
the information is indicative of any one or more of:
the types of multiple media that the application involves;
an instance of the application that involves multiple media types; and
a name of a provider of the application that involves multiple media types.

11. A method as claimed in any of claims 8 to 10, wherein:
the information is in the form of an identifier; and/or
the multiple media types comprise any two or more of audio data, video data, sensor data, and haptic data.

12. An application function (10) configured to transmit (102, 504) a first message towards a network exposure function (20), wherein the first message comprises a first request to reserve resources for an application session for an application that involves multiple media types;
**characterized in that** the first message comprises one or more requirements for the transmission of the multiple media types for the application session and information indicative that the resources are for an application that involves multiple media types, wherein the one or more requirements comprise any one or more of:
one or more required quality of service, QoS, parameters for the transmission of the multiple media types;
a requirement that media types having a dependency on one another are transmitted together;
a requirement that media types having a dependency on one another are transmitted by a single wireless device or via a single wireless device;
a requirement that media types defined as essential for the functioning of the application are transmitted together; and
a requirement that media types defined as essential for the functioning of the application are transmitted by a single wireless device or via a single wireless device.

13. The application function of claim 12, configured to operate in accordance with claim 2 or 3.

14. A network exposure function (20) configured to receive (202, 504) a first message from an application function (10), wherein the first message comprises a first request to reserve resources for an application session for an application that involves multiple media types;
**characterized in that** the first message comprises one or more requirements for the transmission of the multiple media types for the application session and information indicative that the resources are for an application that involves multiple media types, wherein the one or more requirements comprise any one or more of:
a requirement that media types having a dependency on one another are transmitted together;
a requirement that media types having a dependency on one another are transmitted by a single wireless device or via a single wireless device;
a requirement that media types defined as essential for the functioning of the application are transmitted together; and
a requirement that media types defined as essential for the functioning of the application are transmitted by a single wireless device or via a single wireless device.

15. The network exposure function of claim 14, being configured to operate in accordance with any of claims 5 to 7.

16. A system comprising
an application function (10) as claimed in claim 12 or 13;
a network exposure function (20) as claimed in claim 15 when being dependent, directly or indirectly, on claim 5; and
a policy control function (30), the policy control function being configured to derive (510), in response to receiving (508) the second message, one or more quality of service parameters for the application session based on the information indicative that the resources are for an application that involves multiple media types.

17. A computer program comprising instructions which, when executed by processing circuitry, cause the processing circuitry to perform the method according to any of claims 1 to 3, any of claims4 to 7, and/or any of claims 8 to 11.

## Patentansprüche

1. Verfahren zum Verwalten einer Anwendungssitzung, wobei das Verfahren durch eine Anwendungsfunktion (10) durchgeführt wird und das Verfahren Folgendes umfasst:
Übertragen (102, 504) einer ersten Nachricht an eine Netz-Exposure-Funktion (20), wobei die erste Nachricht eine erste Anfrage umfasst, Ressourcen für eine Anwendungssitzung für eine Anwendung zu reservieren, die mehrere Medientypen beinhaltet;
**dadurch gekennzeichnet, dass** die erste Nachricht eine oder mehrere Bedingungen für die Übertragung der mehreren Medientypen für die Anwendungssitzung und Informationen, die anzeigen, dass die Ressourcen für eine Anwendung sind, die mehrere Medientypen beinhaltet, umfasst, wobei die eine oder die mehreren Bedingungen ein beliebiges oder mehrere des Folgenden umfassen:
einen oder mehrere erforderliche Dienstqualitätsparameter, QoS-Parameter, für die Übertragung der mehreren Medientypen;
eine Bedingung, dass Medientypen, die eine Abhängigkeit voneinander aufweisen, gemeinsam übertragen werden;
eine Bedingung, dass Medientypen, die eine Abhängigkeit voneinander aufweisen, durch eine einzige drahtlose Vorrichtung oder über eine einzige drahtlose Vorrichtung übertragen werden;
eine Bedingung, dass Medientypen, die als essentiell für das Funktionieren der Anwendung definiert sind, gemeinsam übertragen werden; und
eine Bedingung, dass Medientypen, die als essentiell für das Funktionieren der Anwendung definiert sind, durch eine einzige drahtlose Vorrichtung oder über eine einzige drahtlose Vorrichtung übertragen werden.

2. Verfahren nach Anspruch 1, wobei:
die Informationen ein beliebiges oder mehrere des Folgenden anzeigen:
die Typen von mehreren Medien, welche die Anwendung beinhaltet;
eine Instanz der Anwendung, die mehrere Medientypen beinhaltet; und
einen Namen eines Anbieters der Anwendung, die mehrere Medientypen beinhaltet.

3. Verfahren nach einem der vorhergehenden Ansprüche, wobei:
die Informationen in Form einer Kennung vorliegen; und/oder
die mehreren Medientypen beliebige zwei oder mehr von Audiodaten, Videodaten, Sensordaten und haptischen Daten umfassen.

4. Verfahren zum Verwalten einer Anwendungssitzung, wobei das Verfahren durch eine Netz-Exposure-Funktion (20) durchgeführt wird und das Verfahren Folgendes umfasst:
Empfangen (202, 504) einer ersten Nachricht von einer Anwendungsfunktion (10), wobei die erste Nachricht eine erste Anfrage umfasst, Ressourcen für eine Anwendungssitzung für eine Anwendung zu reservieren, die mehrere Medientypen beinhaltet;
**dadurch gekennzeichnet, dass** die erste Nachricht eine oder mehrere Bedingungen für die Übertragung der mehreren Medientypen für die Anwendungssitzung und Informationen, die anzeigen, dass die Ressourcen für eine Anwendung sind, die mehrere Medientypen beinhaltet, umfasst, wobei die eine oder die mehreren Bedingungen ein beliebiges oder mehrere des Folgenden umfassen:
eine Bedingung, dass Medientypen, die eine Abhängigkeit voneinander aufweisen, gemeinsam übertragen werden;
eine Bedingung, dass Medientypen, die eine Abhängigkeit voneinander aufweisen, durch eine einzige drahtlose Vorrichtung oder über eine einzige drahtlose Vorrichtung übertragen werden;
eine Bedingung, dass Medientypen, die als essentiell für das Funktionieren der Anwendung definiert sind, gemeinsam übertragen werden; und
eine Bedingung, dass Medientypen, die als essentiell für das Funktionieren der Anwendung definiert sind, durch eine einzige drahtlose Vorrichtung oder über eine einzige drahtlose Vorrichtung übertragen werden.

5. Verfahren nach Anspruch 4, umfassend:
Übertragen (204, 508) einer zweiten Nachricht an eine Richtliniensteuerfunktion (30), wobei die zweite Nachricht eine zweite Anfrage für die Autorisierung der ersten Anfrage umfasst; und
wobei die zweite Nachricht Informationen umfasst, die anzeigen, dass die Ressourcen für eine Anwendung sind, die mehrere Medientypen beinhaltet.

6. Verfahren nach Anspruch 4 oder 5, wobei:
die Informationen ein beliebiges oder mehrere des Folgenden anzeigen:
die Typen von mehreren Medien, welche die Anwendung beinhaltet;
eine Instanz der Anwendung, die mehrere Medientypen beinhaltet; und
einen Namen eines Anbieters der Anwendung, die mehrere Medientypen beinhaltet.

7. Verfahren nach einem der Ansprüche 4 bis 6, wobei:
die Informationen in Form einer Kennung vorliegen; und/oder
die mehreren Medientypen beliebige zwei oder mehr von Audiodaten, Videodaten, Sensordaten und haptischen Daten umfassen.

8. Verfahren zum Verwalten einer Anwendungssitzung, wobei das Verfahren Folgendes umfasst:
Übertragen (102, 504), durch eine Anwendungsfunktion (10), einer ersten Nachricht an eine Netz-Exposure-Funktion (20), wobei die erste Nachricht eine erste Anfrage umfasst, Ressourcen für eine Anwendungssitzung für eine Anwendung zu reservieren, die mehrere Medientypen beinhaltet;
**dadurch gekennzeichnet, dass** die erste Nachricht eine oder mehrere Bedingungen für die Übertragung der mehreren Medientypen für die Anwendungssitzung und Informationen, die anzeigen, dass die Ressourcen für eine Anwendung sind, die mehrere Medientypen beinhaltet, umfasst, wobei die eine oder die mehreren Bedingungen ein beliebiges oder mehrere des Folgenden umfassen:
einen oder mehrere erforderliche Dienstqualitätsparameter, QoS-Parameter, für die Übertragung der mehreren Medientypen;
eine Bedingung, dass Medientypen, die eine Abhängigkeit voneinander aufweisen, gemeinsam übertragen werden;
eine Bedingung, dass Medientypen, die eine Abhängigkeit voneinander aufweisen, durch eine einzige drahtlose Vorrichtung oder über eine einzige drahtlose Vorrichtung übertragen werden;
eine Bedingung, dass Medientypen, die als essentiell für das Funktionieren der Anwendung definiert sind, gemeinsam übertragen werden; und
eine Bedingung, dass Medientypen, die als essentiell für das Funktionieren der Anwendung definiert sind, durch eine einzige drahtlose Vorrichtung oder über eine einzige drahtlose Vorrichtung übertragen werden;
wobei das Verfahren ferner Übertragen (204, 508), durch die Netz-Exposure-Funktion (20), einer zweiten Nachricht an eine Richtliniensteuerfunktion (30) umfasst, wobei die zweite Nachricht eine zweite Anfrage für die Autorisierung der ersten Anfrage umfasst; und wobei die zweite Nachricht Informationen umfasst, die anzeigen, dass die Ressourcen für eine Anwendung sind, die mehrere Medientypen beinhaltet;
als Reaktion auf das Empfangen (508) der zweiten Nachricht, Ableiten (510), durch die Richtliniensteuerfunktion (30), einer oder mehrerer Dienstqualitätsparameter für die Anwendungssitzung basierend auf den Informationen, die anzeigen, dass die Ressourcen für eine Anwendung sind, die mehrere Medientypen beinhaltet.

9. Verfahren nach Anspruch 9, wobei:
sich der eine oder die mehreren Dienstqualitätsparameter, die für die Anwendungssitzung abgeleitet sind, von einem oder mehreren Dienstqualitätsparametern unterscheiden, die für eine Anwendungssitzung für eine Anwendung, die einen einzigen Medientyp beinhaltet, abgeleitet sind.

10. Verfahren nach Anspruch 8 oder 9, wobei:
die Informationen ein beliebiges oder mehrere des Folgenden anzeigen:
die Typen von mehreren Medien, welche die Anwendung beinhaltet;
eine Instanz der Anwendung, die mehrere Medientypen beinhaltet; und
einen Namen eines Anbieters der Anwendung, die mehrere Medientypen beinhaltet.

11. Verfahren nach einem der Ansprüche 8 bis 10, wobei:
die Informationen in Form einer Kennung vorliegen; und/oder die mehreren Medientypen beliebige zwei oder mehr von Audiodaten, Videodaten, Sensordaten und haptischen Daten umfassen.

12. Anwendungsfunktion (10), die dazu konfiguriert ist, eine erste Nachricht an eine Netz-Exposure-Funktion (20) zu übertragen (102, 504), wobei die erste Nachricht eine erste Anfrage umfasst, Ressourcen für eine Anwendungssitzung für eine Anwendung zu reservieren, die mehrere Medientypen beinhaltet;
**dadurch gekennzeichnet, dass** die erste Nachricht eine oder mehrere Bedingungen für die Übertragung der mehreren Medientypen für die Anwendungssitzung und Informationen, die anzeigen, dass die Ressourcen für eine Anwendung sind, die mehrere Medientypen beinhaltet, umfasst, wobei die eine oder die mehreren Bedingungen ein beliebiges oder mehrere des Folgenden umfassen:
einen oder mehrere erforderliche Dienstqualitätsparameter, QoS-Parameter, für die Übertragung der mehreren Medientypen;
eine Bedingung, dass Medientypen, die eine Abhängigkeit voneinander aufweisen, gemeinsam übertragen werden;
eine Bedingung, dass Medientypen, die eine Abhängigkeit voneinander aufweisen, durch eine einzige drahtlose Vorrichtung oder über eine einzige drahtlose Vorrichtung übertragen werden;
eine Bedingung, dass Medientypen, die als essentiell für das Funktionieren der Anwendung definiert sind, gemeinsam übertragen werden; und
eine Bedingung, dass Medientypen, die als essentiell für das Funktionieren der Anwendung definiert sind, durch eine einzige drahtlose Vorrichtung oder über eine einzige drahtlose Vorrichtung übertragen werden.

13. Anwendungsfunktion nach Anspruch 12, die dazu konfiguriert ist, gemäß Anspruch 2 oder 3 zu arbeiten.

14. Netz-Exposure-Funktion (20), die dazu konfiguriert ist, eine erste Nachricht von einer Anwendungsfunktion (10) zu empfangen (202, 504), wobei die erste Nachricht eine erste Anfrage umfasst, Ressourcen für eine Anwendungssitzung für eine Anwendung zu reservieren, die mehrere Medientypen beinhaltet;
**dadurch gekennzeichnet, dass** die erste Nachricht eine oder mehrere Bedingungen für die Übertragung der mehreren Medientypen für die Anwendungssitzung und Informationen, die anzeigen, dass die Ressourcen für eine Anwendung sind, die mehrere Medientypen beinhaltet, umfasst, wobei die eine oder die mehreren Bedingungen ein beliebiges oder mehrere des Folgenden umfassen:
eine Bedingung, dass Medientypen, die eine Abhängigkeit voneinander aufweisen, gemeinsam übertragen werden;
eine Bedingung, dass Medientypen, die eine Abhängigkeit voneinander aufweisen, durch eine einzige drahtlose Vorrichtung oder über eine einzige drahtlose Vorrichtung übertragen werden;
eine Bedingung, dass Medientypen, die als essentiell für das Funktionieren der Anwendung definiert sind, gemeinsam übertragen werden; und
eine Bedingung, dass Medientypen, die als essentiell für das Funktionieren der Anwendung definiert sind, durch eine einzige drahtlose Vorrichtung oder über eine einzige drahtlose Vorrichtung übertragen werden.

15. Netz-Exposure-Funktion nach Anspruch 14, die dazu konfiguriert ist, gemäß einem der Ansprüche 5 bis 7 zu arbeiten.

16. System, umfassend:
eine Anwendungsfunktion (10) nach Anspruch 12 oder 13;
eine Netz-Exposure-Funktion (20) nach Anspruch 15, wenn direkt oder indirekt von Anspruch 5 abhängig; und
eine Richtliniensteuerfunktion (30), wobei die Richtliniensteuerfunktion dazu konfiguriert ist, als Reaktion auf das Empfangen (508) der zweiten Nachricht, einen oder mehrere Dienstqualitätsparameter für die Anwendungssitzung basierend auf den Informationen abzuleiten (510), die anzeigen, dass die Ressourcen für eine Anwendung sind, die mehrere Medientypen beinhaltet.

17. Computerprogramm, umfassend Anweisungen, die, wenn sie durch eine Verarbeitungsschaltung ausgeführt werden, die Verarbeitungsschaltung dazu veranlassen, das Verfahren nach einem der Ansprüche 1 bis 3, einem der Ansprüche 4 bis 7 und/oder einem der Ansprüche 8 bis 11 durchzuführen.

## Revendications

1. Procédé de gestion d'une session d'application, le procédé étant réalisé par une fonction d'application (10), le procédé comprenant :
la transmission (102, 504) d'un premier message vers une fonction d'exposition de réseau (20), dans lequel le premier message comprend une première requête de réservation de ressources pour une session d'application pour une application qui implique de multiples types de médias ;
**caractérisé en ce que** le premier message comprend une ou plusieurs exigences pour la transmission des multiples types de médias pour la session d'application et des informations indicatives du fait que les ressources sont pour une application qui implique de multiples types de médias, dans lequel les une ou plusieurs exigences comprennent l'une quelconque ou plusieurs parmi :
un ou plusieurs paramètres de qualité de service, QoS, requis pour la transmission des multiples types de médias ;
une exigence selon laquelle des types de médias présentant une dépendance les uns par rapport aux autres sont transmis ensemble ;
une exigence selon laquelle des types de médias présentant une dépendance les uns par rapport aux autres sont transmis par un unique dispositif sans fil ou via un unique dispositif sans fil ;
une exigence selon laquelle des types de médias définis comme essentiels pour le fonctionnement de l'application sont transmis ensemble ; et
une exigence selon laquelle des types de médias définis comme essentiels pour le fonctionnement de l'application sont transmis par un unique dispositif sans fil ou via un unique dispositif sans fil.

2. Procédé selon la revendication 1, dans lequel :
les informations sont indicatives de l'un quelconque ou plusieurs parmi :
les types de multiples médias que l'application implique ;
une instance de l'application qui implique de multiples types de médias ; et
un nom d'un fournisseur de l'application qui implique de multiples types de médias.

3. Procédé selon l'une quelconque des revendications précédentes, dans lequel :
les informations sont sous la forme d'un identifiant ; et/ou
les multiples types de médias comprennent deux quelconques ou plusieurs parmi des données audio, des données vidéo, des données de capteur et des données haptiques.

4. Procédé de gestion d'une session d'application, le procédé étant réalisé par une fonction d'exposition de réseau (20), le procédé comprenant :
la réception (202, 504) d'un premier message provenant d'une fonction d'application (10), dans lequel le premier message comprend une première requête de réservation de ressources pour une session d'application pour une application qui implique de multiples types de médias ;
**caractérisé en ce que** le premier message comprend une ou plusieurs exigences pour la transmission des multiples types de médias pour la session d'application et des informations indicatives du fait que les ressources sont pour une application qui implique de multiples types de médias, dans lequel les une ou plusieurs exigences comprennent l'une quelconque ou plusieurs parmi :
une exigence selon laquelle des types de médias présentant une dépendance les uns par rapport aux autres sont transmis ensemble ;
une exigence selon laquelle des types de médias présentant une dépendance les uns par rapport aux autres sont transmis par un unique dispositif sans fil ou via un unique dispositif sans fil ;
une exigence selon laquelle des types de médias définis comme essentiels pour le fonctionnement de l'application sont transmis ensemble ; et
une exigence selon laquelle des types de médias définis comme essentiels pour le fonctionnement de l'application sont transmis par un unique dispositif sans fil ou via un unique dispositif sans fil.

5. Procédé selon la revendication 4, comprenant :
la transmission (204, 508) d'un deuxième message vers une fonction de contrôle de politique (30), dans lequel le deuxième message comprend une deuxième requête d'autorisation de la première requête ; et
dans lequel le deuxième message comprend des informations indicatives du fait que les ressources sont pour une application qui implique de multiples types de médias.

6. Procédé selon la revendication 4 ou 5, dans lequel :
les informations sont indicatives de l'un quelconque ou plusieurs parmi :
les types de multiples médias que l'application implique ;
une instance de l'application qui implique de multiples types de médias ; et
un nom d'un fournisseur de l'application qui implique de multiples types de médias.

7. Procédé selon l'une quelconque des revendications 4 à 6, dans lequel :
les informations sont sous la forme d'un identifiant ; et/ou
les multiples types de médias comprennent deux quelconques ou plusieurs parmi des données audio, des données vidéo, des données de capteur et des données haptiques.

8. Procédé de gestion d'une session d'application, le procédé comprenant :
la transmission (102, 504), par une fonction d'application (10), d'un premier message vers une fonction d'exposition de réseau (20), dans lequel le premier message comprend une première requête de réservation de ressources pour une session d'application pour une application qui implique de multiples types de médias ;
**caractérisé en ce que** le premier message comprend une ou plusieurs exigences pour la transmission des multiples types de médias pour la session d'application et des informations indicatives du fait que les ressources sont pour une application qui implique de multiples types de médias, dans lequel les une ou plusieurs exigences comprennent l'une quelconque ou plusieurs parmi :
un ou plusieurs paramètres de qualité de service, QoS, requis pour la transmission des multiples types de médias ;
une exigence selon laquelle des types de médias présentant une dépendance les uns par rapport aux autres sont transmis ensemble ;
une exigence selon laquelle des types de médias présentant une dépendance les uns par rapport aux autres sont transmis par un unique dispositif sans fil ou via un unique dispositif sans fil ;
une exigence selon laquelle des types de médias définis comme essentiels pour le fonctionnement de l'application sont transmis ensemble ; et
une exigence selon laquelle des types de médias définis comme essentiels pour le fonctionnement de l'application sont transmis par un unique dispositif sans fil ou via un unique dispositif sans fil ;
le procédé comprenant en outre la transmission (204, 508), par la fonction d'exposition de réseau (20), d'un deuxième message vers une fonction de contrôle de politique (30), dans lequel le deuxième message comprend une deuxième requête d'autorisation de la première requête ; et dans lequel le deuxième message comprend des informations indicatives du fait que les ressources sont pour une application qui implique de multiples types de médias ;
en réponse à la réception (508) du deuxième message, la déduction (510), par la fonction de contrôle de politique (30), d'un ou plusieurs paramètres de qualité de service pour la session d'application sur la base des informations indicatives du fait que les ressources sont pour une application qui implique de multiples types de médias.

9. Procédé selon la revendication 9, dans lequel :
les un ou plusieurs paramètres de qualité de service déduits pour la session d'application sont différents d'un ou plusieurs paramètres de qualité de service déduits pour une session d'application pour une application qui implique un unique type de média.

10. Procédé selon la revendication 8 ou 9, dans lequel :
les informations sont indicatives de l'un quelconque ou plusieurs parmi :
les types de multiples médias que l'application implique ;
une instance de l'application qui implique de multiples types de médias ; et
un nom d'un fournisseur de l'application qui implique de multiples types de médias.

11. Procédé selon l'une quelconque des revendications 8 à 10, dans lequel :
les informations sont sous la forme d'un identifiant ; et/ou
les multiples types de médias comprennent deux quelconques ou plusieurs parmi des données audio, des données vidéo, des données de capteur et des données haptiques.

12. Fonction d'application (10) configurée pour transmettre (102, 504) un premier message vers une fonction d'exposition de réseau (20), dans laquelle le premier message comprend une première requête de réservation de ressources pour une session d'application pour une application qui implique de multiples types de médias ;
**caractérisée en ce que** le premier message comprend une ou plusieurs exigences pour la transmission des multiples types de médias pour la session d'application et des informations indicatives du fait que les ressources sont pour une application qui implique de multiples types de médias, dans laquelle les une ou plusieurs exigences comprennent l'une quelconque ou plusieurs parmi :
un ou plusieurs paramètres de qualité de service, QoS, requis pour la transmission des multiples types de médias ;
une exigence selon laquelle des types de médias présentant une dépendance les uns par rapport aux autres sont transmis ensemble ;
une exigence selon laquelle des types de médias présentant une dépendance les uns par rapport aux autres sont transmis par un unique dispositif sans fil ou via un unique dispositif sans fil ;
une exigence selon laquelle des types de médias définis comme essentiels pour le fonctionnement de l'application sont transmis ensemble ; et
une exigence selon laquelle des types de médias définis comme essentiels pour le fonctionnement de l'application sont transmis par un unique dispositif sans fil ou via un unique dispositif sans fil.

13. Fonction d'application selon la revendication 12, configurée pour fonctionner conformément à la revendication 2 ou 3.

14. Fonction d'exposition de réseau (20) configurée pour recevoir (202, 504) un premier message provenant d'une fonction d'application (10), dans laquelle le premier message comprend une première requête de réservation de ressources pour une session d'application pour une application qui implique de multiples types de médias ;
**caractérisée en ce que** le premier message comprend une ou plusieurs exigences pour la transmission des multiples types de médias pour la session d'application et des informations indicatives du fait que les ressources sont pour une application qui implique de multiples types de médias, dans laquelle les une ou plusieurs exigences comprennent l'une quelconque ou plusieurs parmi :
une exigence selon laquelle des types de médias présentant une dépendance les uns par rapport aux autres sont transmis ensemble ;
une exigence selon laquelle des types de médias présentant une dépendance les uns par rapport aux autres sont transmis par un unique dispositif sans fil ou via un unique dispositif sans fil ;
une exigence selon laquelle des types de médias définis comme essentiels pour le fonctionnement de l'application sont transmis ensemble ; et
une exigence selon laquelle des types de médias définis comme essentiels pour le fonctionnement de l'application sont transmis par un unique dispositif sans fil ou via un unique dispositif sans fil.

15. Fonction d'exposition de réseau selon la revendication 14, étant configurée pour fonctionner conformément à l'une quelconque des revendications 5 à 7.

16. Système comprenant :
une fonction d'application (10) selon la revendication 12 ou 13 ;
une fonction d'exposition de réseau (20) selon la revendication 15 lorsqu'elle dépend, directement ou indirectement, de la revendication 5 ; et
une fonction de contrôle de politique (30), la fonction de contrôle de politique étant configurée pour déduire (510), en réponse à la réception (508) du deuxième message, un ou plusieurs paramètres de qualité de service pour la session d'application sur la base des informations indicatives du fait que les ressources sont pour une application qui implique de multiples types de médias.

17. Programme d'ordinateur comprenant des instructions qui, lorsqu'elles sont exécutées par des circuits de traitement, amènent les circuits de traitement à réaliser le procédé selon l'une quelconque des revendications 1 à 3, l'une quelconque des revendications 4 à 7, et/ou l'une quelconque des revendications 8 à 11.
